# EUROPEAN PATENT APPLICATION

(11) **EP 4 628 313 A1**
(43) Date of publication of application: **08.10.2025**
(21) Application number: 23897910.8
(22) Date of filing: 01.12.2023
(51) Int. Cl.: B41M 1/22, B41M 1/14, B41M 1/18, B41M 3/00, G09F 13/04

(54) **PRINTED OBJECT AND DISPLAY DEVICE**

(30) Priority: 02.12.2022 JP 2022193703; 02.12.2022 JP 2022193723; 11.09.2023 JP 2023147130; 11.09.2023 JP 2023147132; 19.10.2023 JP 2023180469; 24.11.2023 JP 2023199250
(71) Applicant: Toppan Holdings Inc., Tokyo 110-0016 (JP)
(72) Inventor: FUNAKI, Hayato, Tokyo 110-0016 (JP); TAKEDA, Tadashi, Tokyo 110-0016 (JP); SUZUKI, Jotaro, Tokyo 110-0016 (JP); OGASAWARA, Motoyuki, Tokyo 110-0016 (JP)
(74) Representative: Hasegawa, Kan
(86) International application number: PCT/JP2023/043188
(87) International publication number: WO 2024/117264

(57) **Abstract**

A printed object according to one aspect comprises a light transmissive base material and a pattern printed layer. The pattern printed layer includes a plurality of interference pearl pigments.

## Description

### Technical Field

The present disclosure relates to a printed object and a display device.

### Background Art

As a decorative sheet for a wall or the like, a printed object including a base material and a printed layer provided on a surface of the base material, the printed layer having a pattern such as a woodgrain pattern or an abstract pattern, is conventionally known. On a wall surface provided with the printed object, the pattern is always visually recognized. It is desired, on the other hand, that a pattern to be visually recognized change depending on whether or not a light source installed on a back surface side of a printed object is used.

For example, Patent Literature 1 discloses a printed object including a light source under a printed layer, in which, when the light source is turned off, a design in the printed layer composed of RGB interference pigments is visually recognized due to reflected light, and when the light source is turned on, on the other hand, a design in a CMY printed layer is visually recognized due to transmitted light (see FIG. 11 of Patent Literature 1). Patent Literature 2 discloses a decorative sheet having two designs of interference pigments, in which, when an image on a back surface side is not displayed, the designs are visually recognized, and when the image on the back surface side is displayed, the image is visually recognized (see FIGS. 1 and 2 of Patent Literature 2).

### Citation List

### Patent Literature

Patent Literature 1: Japanese Patent No. 5725581
Patent Literature 2: Japanese Patent No. 6839319

### Summary of Invention

### Technical Problem

Here, there has been a demand for a printed object capable of expressing a three-dimensional effect more than the printed objects in Patent Literatures 1 and 2.

The present disclosure is intended to solve the above-described problems, and an object thereof is to provide a printed object capable of expressing a three-dimensional effect, and a display device.

### Solution to Problem

A printed object in the present disclosure is a printed object including, in one aspect, a light transmissive base material and a pattern printed layer. The pattern printed layer includes a plurality of interference pearl pigments.

A display device in the present disclosure includes the above-described printed object and a light source.

### Advantageous Effects of Invention

According to the present disclosure, it is possible to provide a printed object and a display device, capable of expressing a three-dimensional effect.

### Brief Description of Drawings

[FIG. 1] FIG. 1 is a cross-sectional view schematically illustrating a display device according to Embodiment 1-1.
[FIG. 2] FIG. 2 is a cross-sectional view schematically illustrating a pattern printed layer included in the display device illustrated in FIG. 1.
[FIG. 3] FIG. 3 is a cross-sectional view schematically illustrating a printed object according to Embodiment 1-2.
[FIG. 4] FIG. 4 is a cross-sectional view schematically illustrating a white pattern layer included in the printed object illustrated in FIG. 3.
[FIG. 5] FIG. 5 is a cross-sectional view schematically illustrating a printed object according to Embodiment 1-3.
[FIG. 6] FIG. 6 is a cross-sectional view schematically illustrating a printed object according to Embodiment 1-4.
[FIG. 7] FIG. 7 is a cross-sectional view schematically illustrating a pattern printed layer included in a display device according to Embodiment 2-1.
[FIG. 8] FIG. 8 is a table showing configurations of printed objects in Experimental Examples 1 to 3.
[FIG. 9] FIG. 9 is a cross-sectional view schematically illustrating a pattern printed layer included in a display device according to Embodiment 3-1.
[FIG. 10] (a) is a schematic diagram illustrating a combination of colors in the pattern printed layer, and (b) is a schematic diagram illustrating a combination of colors in a pattern printed layer in a comparative example.
[FIG. 11] FIG. 11 is a schematic diagram illustrating specific examples of combinations of colors in the pattern printed layer.
[FIG. 12] FIG. 12 is a cross-sectional view schematically illustrating a pattern printed layer included in a display device according to Embodiment 4-1.
[FIG. 13] (a) is a schematic diagram illustrating a combination of colors in the pattern printed layer, and (b) is a schematic diagram illustrating a combination of colors in a pattern printed layer in a comparative example.
[FIG. 14] FIG. 14 is a schematic diagram illustrating specific examples of combinations of colors in the pattern printed layer.
[FIG. 15] FIG. 15 is a cross-sectional view schematically illustrating a display device according to Embodiment 5-1.
[FIG. 16] FIG. 16 is a schematic diagram for explaining functions of the display device according to Embodiment 5-1.
[FIG. 17] FIG. 17 is a schematic diagram for explaining functions of a display device in a comparative example.
[FIG. 18] FIG. 18 is a table showing compared examples and conditions of the examples.
[FIG. 19] FIG. 19 is a cross-sectional view schematically illustrating a printed object according to Embodiment 5-2.
[FIG. 20] FIG. 20 is a cross-sectional view schematically illustrating a printed object according to Embodiment 5-3.
[FIG. 21] FIG. 21 is a cross-sectional view schematically illustrating a printed object according to Embodiment 5-4.
[FIG. 22] FIG. 22 is a cross-sectional view schematically illustrating a decorative panel according to an embodiment of the present disclosure.
[FIG. 23] FIG. 23 is a cross-sectional view schematically illustrating a display device according to the embodiment of the present disclosure.
[FIG. 24] FIG. 24 is a cross-sectional view schematically illustrating a display device according to a modification.
[FIG. 25] FIG. 25 is a cross-sectional view schematically illustrating a specific example of a structure of a pattern layer.
[FIG. 26] FIG. 26 is a cross-sectional view schematically illustrating a decorative panel according to a modification.
[FIG. 27] FIG. 27 is a cross-sectional view schematically illustrating a decorative panel according to another modification.
[FIG. 28] FIG. 28 is a cross-sectional view schematically illustrating a decorative panel in a comparative example.
[FIG. 29] FIG. 29 is a cross-sectional view schematically illustrating a display device in the comparative example.
[FIG. 30] FIG. 30 is a cross-sectional view schematically illustrating a display device in another comparative example.

### Description of Embodiments

### [First Disclosure]

The printed object described in Japanese Patent No. 5725581 includes a first color pattern layer, a second color pattern layer, and a third color pattern layer. Pigment chips included in each pattern layer are any of red interference pigments, green interference pigments, and blue interference pigments. In this printed object, the number of pattern layers is larger in order to make colors more vibrant than in conventional printing. The decorative sheet described in Japanese Patent No. 6839319 includes a first design layer containing a plurality of types of interference pigments and exhibiting a first color mixture, and a second design layer containing a plurality of types of interference pigments and exhibiting a second color mixture different from the first color mixture. Since each of the first design layer and the second design layer contains a plurality of types of interference pigments in this decorative sheet, a color adjustment operation and a registering operation at a time of printing might be complicated.

The present disclosure is intended to solve the above-described problems, and an object thereof is to provide a printed object that can express a pattern having a three-dimensional effect even with a small number of printed layers and that can simplify the color adjustment operation and the registration operation at the time of printing.
[1] The present disclosure relates, in one aspect, to a printed object including a light transmissive base material and a pattern printed layer. In this printed object, the pattern printed layer includes a first color pattern layer provided on one surface of the light transmissive base material and including a plurality of first color dots, and a second color pattern layer provided on the first color pattern layer and including a plurality of second color dots. In this printed object, each of the plurality of first color dots includes a first color binder and a plurality of first color pigment chips dispersed in the first color binder, each of the plurality of second color dots includes a second color binder and a plurality of second color pigment chips dispersed in the second color binder. The plurality of first color pigment chips or the plurality of second color pigment chips are first interference pigments of a plurality of colors that generate beams of first interference light different from each other, another of the plurality of first color pigment chips and the plurality of second color pigment chips is second interference pigments that generate second interference light of a single color different from a color mixture exhibited by the plurality of first interference pigments. The plurality of beams of first interference light and the beam of the second interference light are additively mixed.
   In this printed object, since any one of the first color pattern layer and the second color pattern layer contains interference pigments of a plurality of colors that generate beams of interference light different from each other, it is possible to express a pattern having a three-dimensional effect even with a small number of printed layers. Furthermore, in the printed object, since a pattern layer containing interference pigments that generate a plurality of beams of interference light may be one of the first color pattern layer and the second color pattern layer, the color adjustment operation and the registration operation at the time of printing can be simplified. With the printed object, therefore, a pattern having a three-dimensional effect can be expressed even with a small number of printed layers, and the color adjustment operation and the registration operation at the time of printing can be simplified.
[2] The printed object according to [1] may further include a white pattern layer provided on the second color pattern layer and including a plurality of silver dots. Each of the plurality of silver dots may include a silver binder and a plurality of silver pigment chips dispersed in the silver binder. In this case, the color vibrancy of the first color pattern layer and the second color pattern layer is excellent, and the pattern printed layer can have a pattern that looks whitish.
[3] The printed object according to [1] or [2] may further include a transmissive smoke printed layer provided on an outermost surface of the pattern printed layer on a side opposite a light transmissive base material side. In this case, the color vibrancy of the first color pattern layer and the second color pattern layer is more excellent. Furthermore, since the transmissive smoke printed layer has transparency, a decrease in visibility of an image on the display device is favorably suppressed.
[4] In the printed object according to any one of [1] to [3], each of the first interference pigments and the second interference pigments may contain titanium dioxide-coated mica having a particle size of 25 µm or more and 60 µm or less. When titanium dioxide-coated mica having a particle size of 25 µm or more is contained, transparency and color vibrancy of the pattern printed layer can be improved. When titanium dioxide-coated mica having a particle size of 60 µm or less is contained, it is possible to suppress a decrease in resolution and gradation of the pattern printed layer.
[5] In the printed object according to any one of [1] to [4], a content ratio of the plurality of first color pigment chips may be in a range of 0.5 weight percent to 20 weight percent when the first color binder is assumed to be 100 weight percent, and a content ratio of the plurality of second color pigment chips may be in a range of 0.5 weight percent to 20 weight percent when the second color binder is assumed to be 100 weight percent. When the content ratio of the plurality of first color pigment chips is in the range of 0.5 weight percent or more, the pattern of the first color pattern layer is well expressed. When the content ratio of the plurality of first color pigment chips is in the range of 20 weight percent or less, it is possible to suppress deterioration of a coating property and transparency of the first color pattern layer. Similarly, since the content ratio of the plurality of second color pigment chips is in the range of 0.5 weight percent to 20 weight percent when the second color binder is assumed to be 100 weight percent, it is possible to suppress deterioration of a coating property and transparency of the second color pattern layer while favorably expressing the pattern of the second color pattern layer.
[6] The present disclosure relates, in another aspect, to a display device. The display device includes the printed object according to any one of [1] to [5], and a light source. With the display device, when the light source is turned off, the pattern of the pattern printed layer is visually recognized, and when the light source is turned on, transmitted light (pattern display, image display, etc.) from the light source is visually recognized.
[7] In the display device according to [6], the light source may be a display. With the display device, when the display is turned off, the pattern of the pattern printed layer is visually recognized, and when the display is turned on, transmitted light (pattern display, image display, etc.) from the display is visually recognized.

According to the present disclosure, it is possible to provide a printed object that can express a pattern having a three-dimensional effect even with a small number of printed layers and that can simplify a color adjustment operation and a registration operation at a time of printing.

Specific examples of a display device according to embodiments of the present disclosure will be described hereinafter with reference to the drawings. Note that the present disclosure is not limited to these examples but is indicated by the claims, and is intended to include all modifications within a meaning and a scope equivalent to the claims. In the following description, the same elements will be given the same reference numerals in the description of the drawings, and redundant description thereof is omitted.

### [Embodiment 1-1]

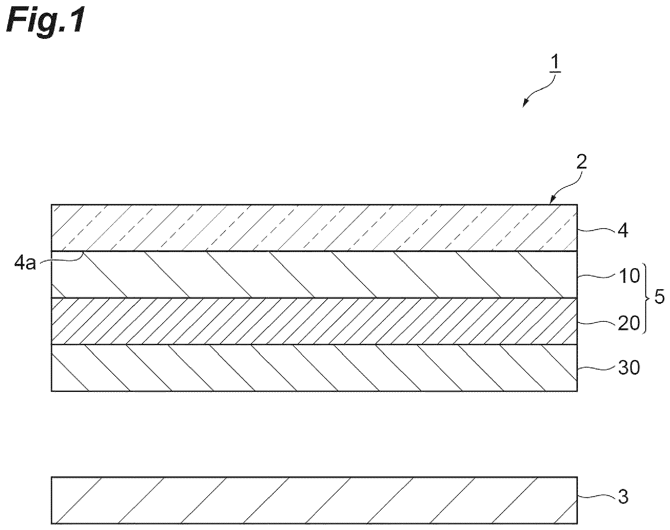

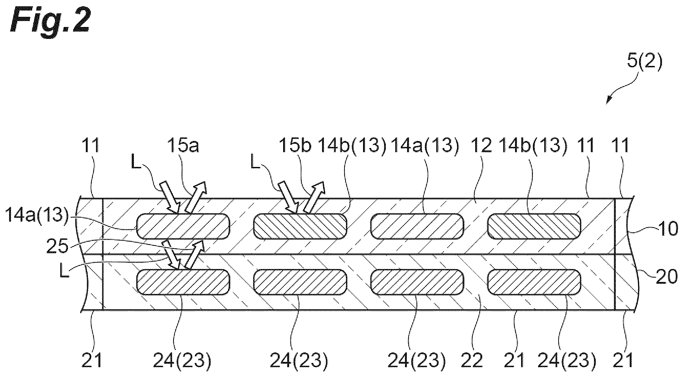

FIG. 1 is a cross-sectional view schematically illustrating a display device according to Embodiment 1-1. FIG. 2 is a cross-sectional view schematically illustrating a pattern printed layer included in the display device illustrated in FIG. 1. As illustrated in FIG. 1, the display device 1 includes a printed object 2 and a light source 3. The printed object 2 is a sheet for expressing a pattern, and includes a light transmissive base material 4, a pattern printed layer 5, and a transmissive smoke printed layer 30. The printed object 2 is provided in front of the light source 3 (between a viewer and the light source 3). The printed object 2 has total light transmittance. When the light source 3 is turned on, the viewer can visually recognize light from the light source 3 passing through the printed object 2, and when the light source 3 is turned off, the viewer can visually recognize the pattern expressed by the printed object 2. The light source 3 is, for example, a display.

The light transmissive base material 4 is a substrate having visible light transmittance. The light transmissive base material 4 is made of, for example, a resin having transparency. Examples of the resin having transparency include PET, PMMA, polycarbonate, polyethylene, polypropylene, and nylon. The light transmissive base material 4 may be a glass substrate. Thickness of the light transmissive base material 4 is, for example, 25 µm to 250 µm, but a substrate having a thickness outside this range can also be used as long as printing is possible. In the case of a glass substrate, the thickness is, for example, several mm to about 10 mm. Note that, if necessary, a surface protective layer may be provided on a front surface side of the light transmissive base material 4 (a side opposite the pattern printed layer 5).

The pattern printed layer 5 is a layer that expresses the pattern of the printed object 2. The pattern printed layer 5 includes a first color pattern layer 10 provided on one surface 4a of the light transmissive base material 4, and a second color pattern layer 20 provided on the first color pattern layer 10.

The first color pattern layer 10 can be provided on the surface 4a through, for example, screen printing, inkjet printing, gravure printing, or offset printing. As illustrated in FIG. 2, the first color pattern layer 10 includes a plurality of first color dots 11. Here, the "dots" mean spots that are elements constituting a printed image, and a shape thereof is not limited to a circle, and may be a rectangle, a polygon, or another shape. Each of the plurality of first color dots 11 includes a first color binder 12 and a plurality of first color pigment chips 13 dispersed in the first color binder 12. A content ratio of the plurality of first color pigment chips 13 is, for example, in a range of 0.5 weight percent to 20 weight percent when the first color binder 12 is assumed to be 100 weight percent.

Examples of the first color binder 12 include vinyl-based resins, acryl-based resins, thermoplastic urethane-based resins, polyester-based resins, and polycarbonate-based resins. Thickness of the first color pattern layer 10 is, for example, 1 µm to 10 µm. Note that the first color pattern layer 10 may contain a curing agent. In this case, heat resistance of the first color pattern layer 10 and adhesion of the first color pattern layer 10 to the light transmissive base material 4 can be improved. The first color pattern layer 10 may contain a weatherproofing agent. As the weatherproofing agent, a known ultraviolet absorber or light stabilizer may be used.

In Embodiment 1-1, the plurality of first color pigment chips 13 is first interference pigments 14a and 14b of a plurality of colors that generate beams of interference light different from each other. Each of the first interference pigments 14a and 14b includes a flake (not illustrated) having visible light transmittance and a metal oxide film (not illustrated) covering the flake. Of light incident on the first color pattern layer 10 from a light transmissive base material 4 side, light reflected from surfaces of the metal oxide film and light passing through the metal oxide film and reflected from a surface of the flake interfere with each other to generate interference light. By adjusting film thickness of the metal oxide film and a refractive index of the metal oxide film, interference light having a desired wavelength can be generated.

In Embodiment 1-1, each of the first interference pigments 14a and 14b is titanium dioxide-coated mica. A particle size range of the titanium dioxide-coated mica includes, for example, a range of 25 µm or more and 60 µm or less. Note that, here, the "particle size" means the largest diameter of a particle cross section. The flakes constituting the first interference pigments 14a and 14b may be other than mica, and may be, for example, silica, alumina, glass, or a polysilicate, instead. The metal oxide films constituting the first interference pigments 14a and 14b may be other than titanium dioxide, and may be, for example, zirconium oxide, zinc oxide, iron oxide, or tin oxide, instead.

When incident light E enters the first color pattern layer 10, beams of first interference light 15a and 15b different from each other are generated from each of the first interference pigments 14a and 14b. That is, wavelengths of the beams of first interference light 15a and 15b are different from each other. The first interference pigments 14a and 14b thus exhibit a color mixture. The first interference pigments 14a and 14b are, for example, a red interference pigment (red pearl pigment) and a gold interference pigment (gold pearl pigment), respectively. In this case, the beams of first interference light 15a and 15b exhibit red and gold, respectively. Blending amounts of the first interference pigments 14a and 14b may be the same or different from each other.

The second color pattern layer 20 can be provided on the first color pattern layer 10 through, for example, screen printing, inkjet printing, gravure printing, or offset printing. As illustrated in FIG. 2, the second color pattern layer 20 includes a plurality of second color dots 21. Here, the "dots" mean spots that are elements constituting a printed image, and a shape thereof is not limited to a circle, and may be a rectangle, a polygon, or another shape. Each of the plurality of second color dots 21 includes a second color binder 22 and a plurality of second color pigment chips 23 dispersed in the second color binder 22. A content ratio of the plurality of second color pigment chips 23 is, for example, in a range of 0.5 weight percent to 20 weight percent when the second color binder 22 is assumed to be 100 weight percent.

Examples of the second color binder 22 include vinyl-based resins, acryl-based resins, thermoplastic urethane-based resins, polyester-based resins, and polycarbonate-based resins. Thickness of the second color pattern layer 20 is, for example, 1 µm to 10 µm. Note that the second color pattern layer 20 may contain a curing agent. In this case, heat resistance of the second color pattern layer 20 and adhesion of the second color pattern layer 20 to the first color pattern layer 10 can be improved. In addition, the second color pattern layer 20 may contain a weatherproofing agent. As the weatherproofing agent, a known ultraviolet absorber or light stabilizer may be used.

In Embodiment 1-1, the plurality of second color pigment chips 23 is second interference pigments 24 that generate interference light of a single color different from the color mixture exhibited by the first interference pigments 14a and 14b. Each of the second interference pigments 24 includes a flake (not illustrated) having visible light transmittance and a metal oxide film (not illustrated) covering the flake. Of light incident on the second color pattern layer 20 from the light transmissive base material 4 side, light reflected from a surface of the metal oxide film and light passing through the metal oxide film and reflected from surface of the flake interfere with each other to generate interference light. By adjusting film thickness of the metal oxide film and a refractive index of the metal oxide film, interference light having a desired wavelength can be generated.

In Embodiment 1-1, the second interference pigments 24 are titanium dioxide-coated mica. A particle size range of the titanium dioxide-coated mica includes, for example, a range of 25 µm or more and 60 µm or less. Note that, here, the "particle size" means the largest diameter of a particle cross section. The flakes constituting the second interference pigments 24 may be other than mica, and may be, for example, silica, alumina, glass, or a polysilicate, instead. The metal oxide films constituting the second interference pigments 24 may be other than titanium dioxide, and may be, for example, zirconium oxide, zinc oxide, iron oxide, or tin oxide, instead.

When the incident light E enters the second color pattern layer 20, second interference light 25 of a single color is generated from the second interference pigments 24. The second interference pigments 24 thus exhibit the single color. The second interference pigments 24 may be any interference pigments that generate the second interference light 25 of a single color different from the color mixture exhibited by the first interference pigments 14a and 14b, and are, for example, green interference pigments (green pearl pigments). In this case, the second interference light 25 exhibits green.

The transmissive smoke printed layer 30 has a function of attenuating light passing through the printed object 2 from a front side of a viewpoint. The transmissive smoke printed layer 30 is provided on an outermost surface of the pattern printed layer 5 on a side opposite the light transmissive base material 4. In Embodiment 1-1, the transmissive smoke printed layer 30 is provided on the second color pattern layer 20 as illustrated in FIG. 1. The transmissive smoke printed layer 30 can be provided on the second color pattern layer 20 through, for example, screen printing, inkjet printing, gravure printing, or offset printing using an ink in which a small amount of carbon black is dispersed in a vinyl-based, acrylic-based, urethane-based, or polyester-based resin binder. Thickness of the transmissive smoke printed layer 30 is, for example, 1 µm to 10 µm. Note that the transmissive smoke printed layer 30 may contain a curing agent. In this case, heat resistance of the transmissive smoke printed layer 30 and adhesion of the transmissive smoke printed layer 30 to the second color pattern layer 20 can be improved. In addition, the transmissive smoke printed layer 30 may contain a weatherproofing agent. As the weatherproofing agent, a known ultraviolet absorber or light stabilizer may be used.

In the printed object 2, a pattern is expressed by additively mixing the beams of first interference light 15a and 15b generated by the first interference pigments 14a and 14b and the beams the second interference light 25 generated by the second interference pigments 24.

Total light transmittance of the printed object 2 is, for example, 30% to 70%. The total light transmittance referred to herein means a value obtained by measuring total light transmittance using a spectrophotometer (for example, spectrophotometer UV-2100 manufactured by Shimadzu Corporation).

In the printed object 2 according to Embodiment 1-1 described above, since the first color pattern layer 10 contains the first interference pigments 14a and 14b and the second color pattern layer 20 contains the second interference pigments 24, a pattern expression with a three-dimensional effect can be achieved even with a small number of printed layers. Furthermore, in the printed object 2, since a pattern layer containing interference pigments that generate beams of interference light different from each other is only the first color pattern layer 10 among the first color pattern layer 10 and the second color pattern layer 20, the color adjustment operation and the registration operation at the time of printing can be simplified. With the printed object 2, therefore, a pattern having a three-dimensional effect can be expressed even with a small number of printed layers, and the color adjustment operation and the registration operation at the time of printing can be simplified.

In Embodiment 1-1, the printed object 2 includes the transmissive smoke printed layer 30 provided on the second color pattern layer 20. Color vibrancy of the first color pattern layer 10 and the second color pattern layer 20 is thus more excellent. Furthermore, since the transmissive smoke printed layer 30 has transparency, a decrease in visibility of an image on the display device 1 is favorably suppressed.

In Embodiment 1-1, each of the first interference pigments 14a and 14b and the second interference pigments 24 contains titanium dioxide-coated mica having a particle size of 25 µm or more and 60 µm or less. When titanium dioxide-coated mica having a particle size of 25 µm or more is contained, transparency and color vibrancy of the pattern printed layer 5 can be improved. When titanium dioxide-coated mica having a particle size of 60 µm or less is contained, it is possible to suppress a decrease in resolution and gradation of the pattern printed layer 5.

In Embodiment 1-1, the content ratio of the plurality of first color pigment chips 13 is in the range of 0.5 weight percent to 20 weight percent when the first color binder 12 is assumed to be 100 weight percent, and the content ratio of the plurality of second color pigment chips 23 is in the range of 0.5 weight percent to 20 weight percent when the second color binder is assumed to be 100 weight percent. Since the content ratio of the plurality of first color pigment chips 13 is in the range of 0.5 weight percent or more, the pattern of the first color pattern layer 10 is well expressed. Since the content ratio of the plurality of first color pigment chips 13 is in the range of 20 weight percent or less, it is possible to suppress deterioration of a coating property and transparency of the first color pattern layer 10. Similarly, since the content ratio of the plurality of second color pigment chips 23 is in the range of 0.5 weight percent to 20 weight percent when the second color binder 22 is assumed to be 100 weight percent, it is possible to suppress deterioration of the coating property and transparency of the second color pattern layer 20 while favorably expressing the pattern of the second color pattern layer 20.

In Embodiment 1-1, the total light transmittance of the printed object 2 is 30% to 70%. When the total light transmittance is 30% or more and the printed object 2 is placed in front of a screen, the pattern printed layer 5 becomes difficult to be visually recognized due to light of an image on the screen, and the image is more clearly recognized visually. When the total light transmittance is 70% or less, the pattern of the pattern printed layer 5 can be suppressed from appearing dark even if the screen is black.

In Embodiment 1-1, the display device 1 includes the printed object 2 and the light source 3. With the display device 1, when the light source 3 is turned off, the pattern of the pattern printed layer 5 is visually recognized, and when the light source 3 is turned on, transmitted light (pattern display, image display, etc.) from the light source 3 is visually recognized.

In Embodiment 1-1, the light source 3 may be a display. In this case, when the display is turned off, the pattern of the pattern printed layer 5 is visually recognized, and when the display is turned on, transmitted light (pattern display, image display, etc.) from the display is visually recognized.

As described above, the plurality of interference pigments 14a, 14b, and 24 may include pearl pigments. That is, the pattern printed layer 5 may include a plurality of interference pearl pigments (interference pigments 14a, 14b, and 24) different from one another. The printed object 2, therefore, is a printed object 2 including the light transmissive base material 4 and the pattern printed layer 5, and the pattern printed layer 5 may include a plurality of interference pearl pigments. The pattern printed layer 5 can thus express a three-dimensional effect.

The pattern printed layer 5 may include a first color pattern layer 10 containing an interference pearl pigment and a second color pattern layer 20 containing an interference pearl pigment. The pattern printed layer 5 can thus express a more three-dimensional effect.

Each of the first color pattern layer 10 and the second color pattern layer 20 may contain a plurality of interference pearl pigments. The pattern printed layer 5 can thus express a more three-dimensional effect. For example, the second color pattern layer 20 may contain other interference pearl pigments in addition to the interference pigments 24.

The particle sizes of the plurality of interference pearl pigments may be different from each other. As described above, by containing interference pearl pigments of various particle sizes, a decrease in the transparency of the pattern printed layer 5 is suppressed.

The particle sizes of the plurality of interference pearl pigments may be 25 µm or more and 60 µm or less. In this case, the color vibrancy of the pattern of the pattern printed layer 5 can be further improved. In addition, an unnecessary decrease in the transparency of the pattern printed layer 5 can be suppressed, and when the display device is used, the visibility of an image on the display device can be improved.

The interference pearl pigments may contain titanium dioxide-coated mica. In this case, wavelength of interference light can be adjusted by adjusting film thickness of a titanium dioxide film. In addition, perceived brightness can be improved by improving smoothness of a mica surface.

Note that an effect produced by the pattern printed layer 5 including the plurality of interference pearl pigments can be produced not only in a first disclosure but also in second to sixth disclosures described later.

### [Embodiment 1-2]

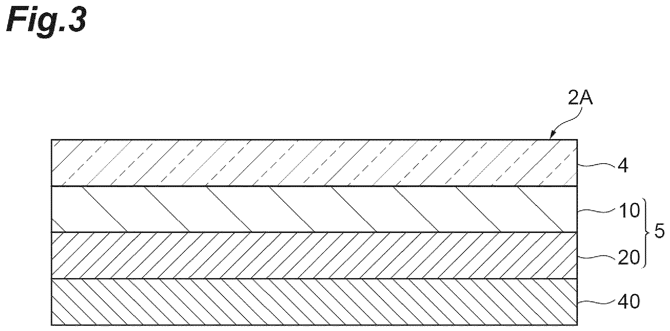

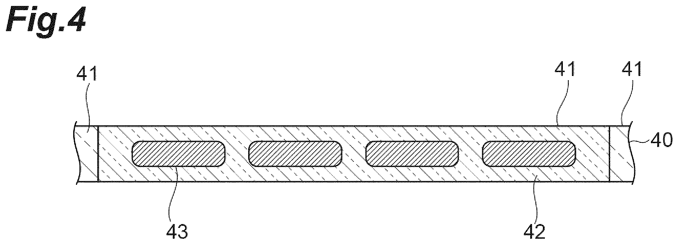

A printed object 2A according to Embodiment 1-2 will be described with reference to FIGS. 3 and 4. In the description of Embodiment 1-2, redundant description with respect to Embodiment 1-1 described above is omitted, and differences from Embodiment 1-1 will be described. That is, the description of Embodiment 1-1 may be appropriately used for Embodiment 1-2 as long as it is technically possible.

FIG. 3 is a cross-sectional view schematically illustrating a printed object according to Embodiment 1-2. FIG. 4 is a cross-sectional view schematically illustrating a white pattern layer included in the printed object illustrated in FIG. 3. The printed object 2A includes a light transmissive base material 4 and a pattern printed layer 5. The printed object 2A further includes a white pattern layer 40 provided on the second color pattern layer 20.

The white pattern layer 40 can be provided on the second color pattern layer 20 through, for example, screen printing, inkjet printing, gravure printing, or offset printing. As illustrated in FIG. 4, the white pattern layer 40 includes a plurality of silver dots 41. Here, the "dots" mean spots that are elements constituting a printed image, and a shape thereof is not limited to a circle, and may be a rectangle, a polygon, or another shape. Each of the plurality of silver dots 41 includes a silver binder 42 and a plurality of silver pigment chips 43 dispersed in the silver binder 42. A content ratio of the plurality of silver pigment chips 43 is, for example, in a range of 0.5 weight percent to 20 weight percent when the silver binder 42 is assumed to be 100 weight percent.

Examples of the silver binder 42 include vinyl-based resins, acryl-based resins, thermoplastic urethane-based resins, polyester-based resins, and polycarbonate-based resins. Thickness of the white pattern layer 40 is, for example, 1 µm to 10 µm. Note that the silver pattern layer 40 may contain a curing agent. In this case, heat resistance of the white pattern layer 40 and adhesion of the white pattern layer 40 to the second color pattern layer 20 can be improved. In addition, the white pattern layer 40 may contain a weatherproofing agent. As the weatherproofing agent, a known ultraviolet absorber or light stabilizer may be used.

Even with the configuration of the printed object 2A described above, the same functions and effects as those of Embodiment 1-1 described above can be produced. Furthermore, in Embodiment 1-2, the white pattern layer 40 provided on the second color pattern layer 20 and including the plurality of silver dots 41 is provided, and each of the plurality of silver dots 41 includes the silver binder 42 and the plurality of silver pigment chips 43 dispersed in the silver binder 42. The color vibrancy of the first color pattern layer 10 and the second color pattern layer 20 is thus excellent, and the pattern printed layer 5 can have a pattern that looks whitish.

### [Embodiment 1-3]

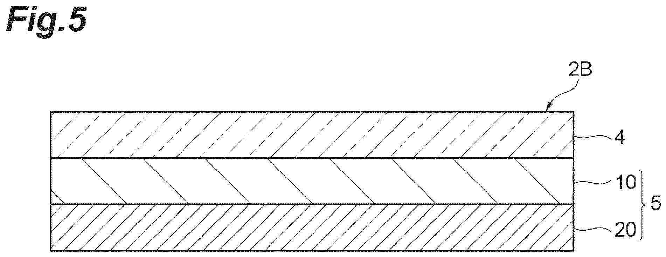

A printed object 2B according to Embodiment 1-3 will be described hereinafter with reference to FIG. 5. Note that, in the description of Embodiment 1-3, redundant description with respect to Embodiments 1-1 and 1-2 described above is omitted, and differences from Embodiments 1-1 and 1-2 will be described. That is, the description of Embodiments 1-1 and 1-2 may be appropriately used for Embodiment 1-3 as long as it is technically possible.

FIG. 5 is a cross-sectional view schematically illustrating a printed object according to Embodiment 1-3. The printed object 2B includes the light transmissive base material 4 and the pattern printed layer 5. That is, the printed object 2B does not include the transmissive smoke printed layer 30 and the white pattern layer 40. Even with the configuration of the printed object 2B described above, the same functions and effects as those of Embodiment 1-1 described above can be produced.

### [Embodiment 1-4]

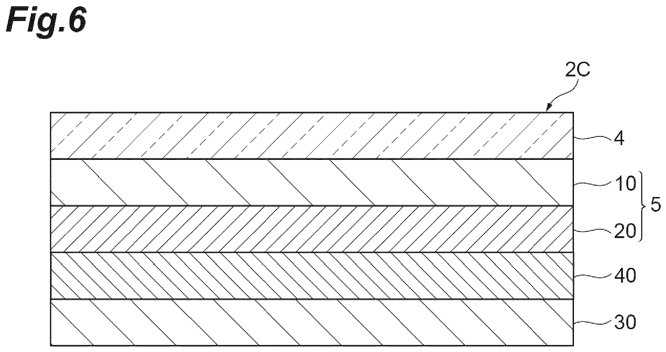

A printed object 2C according to Embodiment 1-4 will be described hereinafter with reference to FIG. 6. Note that, in the description of Embodiment 1-4, redundant description with respect to Embodiments 1-1, 1-2, and 1-3 described above is omitted, and differences from Embodiments 1-1, 1-2, and 1-3 will be described. That is, the description of Embodiments 1-1, 1-2, and 1-3 may be appropriately used for Embodiment 1-4 as long as it is technically possible.

FIG. 6 is a cross-sectional view schematically illustrating a printed object according to Embodiment 1-4. The printed object 2C includes the light transmissive base material 4, the pattern printed layer 5, the white pattern layer 40, and the transmissive smoke printed layer 30. The white pattern layer 40 is provided on the second color pattern layer 20, and the transmissive smoke printed layer 30 is provided on the white pattern layer 40. Even with the configuration of the printed object 2C described above, the same functions and effects as those of Embodiments 1-1, 1-2, and 1-3 can be produced.

The display device and the printed object in the present disclosure are not limited to the above-described embodiments, and various other modifications are possible. For example, the second color pattern layer may contain first interference pigments of a plurality of colors that generates beams of first interference light different from each other, and the first color pattern layer may contain second interference pigments that generate second interference light of a single color different from a color mixture exhibited by the plurality of first interference pigments. In addition, although the first color pigment chips are first interference pigments of two colors in each of the above embodiments, the first color pigment chips may be first interference pigments of three or more colors, instead.

### [Second Disclosure]

In the printed object and the like described in Japanese Patent No. 5725581, color vibrancy of the designs (patterns) might be deteriorated depending on particle size of the interference pigments. A printed object having excellent color vibrancy is desired so that a viewer can favorably recognize colors of the patterns. A printed object and the like described in Japanese Patent No. 6839319, on the other hand, might be placed in front of a display device having a display whose screen turns black when turned off. In this case, when the display device is turned off, the pattern of the printed object might look dark, and visibility of the pattern might deteriorate.

The present disclosure is intended to solve the above-described problems, and an object thereof is to provide a printed object and a display device having a pattern excellent in visibility and color vibrancy.
[1] The present disclosure relates, in one aspect, to a printed object including a light transmissive base material and a pattern printed layer. In this printed object, the pattern printed layer includes a first color pattern layer provided on one surface of the light transmissive base material and including a plurality of first color dots, and a second color pattern layer provided on the first color pattern layer and including a plurality of second color dots. In this printed object, each of the plurality of first color dots includes a first color binder and a plurality of first color pigment chips dispersed in the first color binder, and each of the plurality of second color dots includes a second color binder and a plurality of second color pigment chips dispersed in the second color binder. The plurality of first color pigment chips or the plurality of second color pigment chips is first interference pigments of a plurality of colors that generate beams of first interference light different from each other, and another of the plurality of first color pigment chips and the plurality of second color pigment chips is second interference pigments that generate second interference light of a single color different from a color mixture exhibited by the plurality of first interference pigments. In this printed object, at least the first interference pigments or the second interference pigments include interference pigments having a small particle size grade including a particle size range of 5 µm to 25 µm and interference pigments having a large particle size grade including a particle size range of 25 µm to 40 µm, the interference pigments having the small particle size grade are disposed in such a way as to fill gaps between the interference pigments having the large particle size grade, and the plurality of beams of first interference light and the second interference light are additively mixed.
   According to studies conducted by the present disclosers, it has been found that when the particle size of the interference pigments contained in the pattern printed layer is small, the color vibrancy is weak, but even if the printed object is disposed in front of a black screen, the pattern can be inhibited from appearing dark. It has also been found that when the particle size of the interference pigments contained in the pattern printed layer is large, on the other hand, the transparency of the printed object is increased, but the color vibrancy of the pattern can be improved. The present disclosers, therefore, have conceived a printed object in which a pattern is inhibited from appearing dark and color vibrancy of the pattern is excellent by configuring interference pigments such that the interference pigments include interference pigments having a small particle size grade and interference pigments having a large particle size grade and disposing the interference pigments having the small particle size grade in such a way as to fill gaps between the interference pigments having the large particle size grade. With the printed object having the above configuration, it is possible to provide a pattern having excellent visibility and color vibrancy. Furthermore, in this printed object, since the interference pigments having the large particle size grade are contained, a decrease in the transparency of the pattern printed layer is suppressed. With the printed object, therefore, when power is turned on, a decrease in the visibility of an image on the display device can be favorably suppressed.
[2] In the printed object according to [1], the interference pigments having the large particle size grade may include a particle size range of 25 µm to 60 µm. In this case, the color vibrancy of the pattern can be further improved. In addition, an unnecessary decrease in the transparency of the pattern printed layer can be suppressed, and the visibility of an image on the display device can be improved when the display device is used.
[3] In the printed object according to [1] or [2], at least ones of the interference pigments having the small particle size grade and the interference pigments having the large particle size grade may be interference pigments containing titanium dioxide-coated mica. In this case, wavelength of interference light can be adjusted by adjusting film thickness of a titanium dioxide film. In addition, perceived brightness can be improved by improving smoothness of a mica surface.
[4] The printed object according to any one of [1] to [3] may further include a white pattern layer provided on the second color pattern layer and including a plurality of silver dots, and each of the plurality of silver dots may include a silver binder and a plurality of silver pigment chips dispersed in the silver binder. In this case, the color vibrancy of the first color pattern layer and the second color pattern layer is more excellent, and the pattern printed layer can have a pattern that looks whitish.
[5] The printed object according to any one of [1] to [4] may further include a transmissive smoke printed layer provided on an outermost surface of the pattern printed layer opposite the light transmissive base material. In this case, the color vibrancy of the first color pattern layer and the second color pattern layer is more excellent. Furthermore, since the transmissive smoke printed layer has transparency, a decrease in visibility of an image on the display device is favorably suppressed.
[6] The present disclosure relates, in another aspect, to a display device. The display device includes the printed object according to any one of [1] to [5], and a light source. With the display device, when the light source is turned off, the pattern of the pattern printed layer is visually recognized, and when the light source is turned on, transmitted light (pattern display, image display, etc.) from the light source is visually recognized.
[7] In the display device according to [6], the light source may be a display. With the display device, when the display is turned off, the pattern of the pattern printed layer is visually recognized, and when the display is turned on, transmitted light (pattern display, image display, etc.) from the display is visually recognized.

According to the present disclosure, it is possible to provide a printed object and a display device having a pattern excellent in visibility and color vibrancy.

Specific examples of a display device according to embodiments of the present disclosure will be described hereinafter with reference to the drawings. Note that the present disclosure is not limited to these examples but is indicated by the claims, and is intended to include all modifications within a meaning and a scope equivalent to the claims. In the following description, the same elements will be given the same reference numerals in the description of the drawings, and redundant description thereof is omitted.

### [Embodiment 2-1]

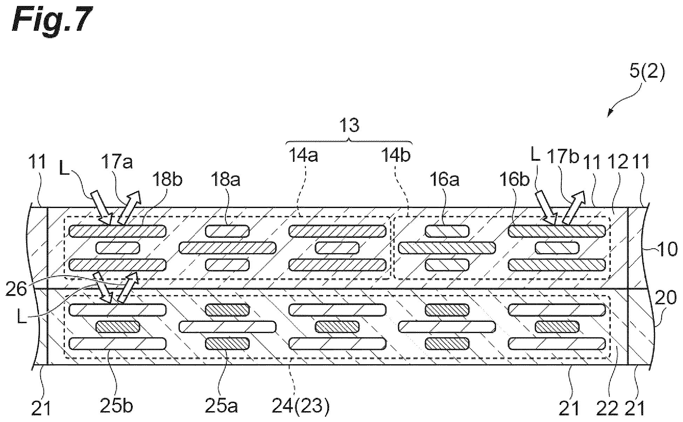

As a printed object and a display device according to the present embodiment, the same configuration as that illustrated in FIG. 1 may be employed. In the printed object and the display device according to the present embodiment, therefore, description of the same components as those of the printed object and the display device according to Embodiment 1-1 is omitted. In the printed object and the display device according to Embodiment 2-1, a layer configuration illustrated in FIG. 7 is employed instead of the layer configuration illustrated in FIG. 2.

The first interference pigments 14a include a plurality of first titanium dioxide-coated micas 18a having a small particle size grade including a particle size range of 5 µm to 25 µm, and second titanium dioxide-coated micas 18b having a large particle size grade including a particle size range of 25 µm to 40 µm. The first interference pigments 14b include a plurality of first titanium dioxide-coated micas 16a having a small particle size grade including a particle size range of 5 µm to 25 µm, and second titanium dioxide-coated micas 16b having a large particle size grade including a particle size range of 25 µm to 40 µm. An average particle size (D50) of the first titanium dioxide-coated micas 18a and 16a is, for example, about 15 µm, and an average particle size (D50) of the second titanium dioxide-coated micas 18b and 16b is, for example, about 25 µm. The average particle size of the first titanium dioxide-coated micas 18a and 16a is thus smaller than the average particle size of the second titanium dioxide-coated micas 18b and 16b. The second titanium dioxide-coated micas 18b and 16b may include a particle size range of 25 µm to 60 µm, instead. In this case, the average particle size (D50) of the second titanium dioxide-coated micas 18b and 16b is, for example, about 35 µm. As illustrated in FIG. 7, each of the plurality of first titanium dioxide-coated micas 18a and 16a is disposed in such a way as to fill gaps between the plurality of second titanium dioxide-coated micas 18b and 16b. Here, the "particle size" means the largest diameter of a particle cross section.

When incident light L enters the first color pattern layer 10, beams of first interference light 17a and 17b different from each other are generated from each of the first interference pigments 14a and 14b. That is, wavelengths of the beams of first interference light 17a and 17b are different from each other. The first interference pigments 14a and 14b thus exhibit a color mixture. The first interference pigments 14a and 14b may be, for example, a red interference pigment (red pearl pigment) and a gold interference pigment (gold pearl pigment), respectively. In this case, the beams of first interference light 17a and 17b exhibit red and gold, respectively. Each of the first interference pigments 14a and 14b may be an interference pigment of another color, instead. Blending amounts of the first interference pigments 14a and 14b may be the same or different from each other.

As the second color pattern layer 20, the same layer described in the first disclosure may be employed.

The second interference pigments 24 include a plurality of first titanium dioxide-coated micas 25a having a small particle size grade including a particle size range of 5 µm to 25 µm, and second titanium dioxide-coated micas 25b having a large particle size grade including a particle size range of 25 µm to 40 µm. An average particle size (D50) of the first titanium dioxide-coated micas 25a is, for example, about 15 µm, and an average particle size (D50) of the second titanium dioxide-coated micas 25b is, for example, about 25 µm. The average particle size of the first titanium dioxide-coated micas 25a is thus smaller than the average particle size of the second titanium dioxide-coated micas 25b. The second titanium dioxide-coated micas 25b may include a particle size range of 25 µm to 60 µm, instead. In this case, the average particle size (D50) of the second titanium dioxide-coated micas 25b is, for example, about 35 µm. The plurality of first titanium dioxide-coated micas 25a is disposed in such a way as to fill gaps between the plurality of second titanium dioxide-coated micas 25b. Here, the "particle size" means the largest diameter of a particle cross section.

When the incident light L enters the second color pattern layer 20, second interference light 26 of a single color is generated from the second interference pigments 24. The second interference pigments 24 thus exhibit the single color. The second interference pigments 24 may be any interference pigments that generate the second interference light 26 of a single color different from the color mixture exhibited by the first interference pigments 14a and 14b, and may be, for example, green interference pigments (green pearl pigments). In this case, the second interference light 26 exhibits green. Note that the second interference pigments 24 may be interference pigments of a color other than green, instead.

The transmissive smoke printed layer 30 is a layer for attenuating light transmitted through the printed object 2. The transmissive smoke printed layer 30 is provided on an outermost surface of the pattern printed layer 5 on a side opposite the light transmissive base material 4. In Embodiment 2-1, the transmissive smoke printed layer 30 is provided on the second color pattern layer 20 as illustrated in FIG. 1. The transmissive smoke printed layer 30 can be provided on the second color pattern layer 20 through, for example, screen printing, inkjet printing, gravure printing, or offset printing using an ink in which a small amount of carbon black is dispersed in a vinyl-based, acrylic-based, urethane-based, or polyester-based resin binder. Thickness of the transmissive smoke printed layer 30 is, for example, 1 µm to 10 µm. Note that the transmissive smoke printed layer 30 may contain a curing agent. In this case, heat resistance of the transmissive smoke printed layer 30 and adhesion of the transmissive smoke printed layer 30 to the second color pattern layer 20 can be improved. In addition, the transmissive smoke printed layer 30 may contain a weatherproofing agent. As the weatherproofing agent, a known ultraviolet absorber or light stabilizer may be used.

In the printed object 2, a pattern is expressed by additively mixing the beams of first interference light 17a and 17b generated by the first interference pigments 14a and 14b and the second interference light 26 generated by the second interference pigments 24.

Total light transmittance of the printed object 2 is, for example, 30% to 70%. The total light transmittance referred to herein means a value obtained by measuring total light transmittance using a spectrophotometer (for example, spectrophotometer UV-2100 manufactured by Shimadzu Corporation).

In the first color pattern layer 10 of the printed object 2 according to Embodiment 2-1 described above, the plurality of first titanium dioxide-coated micas 18a and 16a having the small particle size grade including the particle size range of 5 µm to 25 µm is disposed in such a way as to fill the gaps between the plurality of second titanium dioxide-coated micas 18b and 16b having the large particle size grade including the particle size range of 25 µm to 40 µm. In the second color pattern layer 20 of the printed object 2, each of the plurality of first titanium dioxide-coated micas 25a having the small particle size grade including the particle size range of 5 µm to 25 µm is disposed in such a way as to fill the gaps between the plurality of second titanium dioxide-coated micas 25b having the large particle size grade including the particle size range of 25 µm to 40 µm. According to the printed object 2, therefore, it is possible to provide a pattern having excellent visibility and color vibrancy. Furthermore, the first color pattern layer 10 of the printed object 2 contains the second titanium dioxide-coated micas 18b and 16b having the large particle size grade, and the second color pattern layer 20 contains the second titanium dioxide-coated micas 25b having the large particle size grade, thereby suppressing a decrease in the transparency of the pattern printed layer 5. According to the printed object 2, therefore, when power is turned on, a decrease in the visibility of an image on the display device can be favorably suppressed.

In Embodiment 2-1, the second titanium dioxide-coated micas 18b, 16b, and 25b having the large particle size grade may be configured to include the particle size range of 25 µm to 60 µm. In this case, the color vibrancy of the pattern is more excellent. In addition, an unnecessary decrease in the transparency of the pattern printed layer 5 can be suppressed, and the visibility of an image on the display device 1 can be improved when the display device is used.

In Embodiment 2-1, the first interference pigments 14a and 14b and the second interference pigments 24 are interference pigments containing titanium dioxide-coated micas. The wavelength of interference light can thus be adjusted by adjusting the film thickness of the titanium dioxide film. In addition, perceived brightness can be improved by improving smoothness of a mica surface.

In the second disclosure, too, the configuration according to any of Embodiments 1-2 to 1-4 in the first disclosure may be employed.

Although the first interference pigments and the second interference pigments each contain a plurality of first titanium dioxide-coated micas and a plurality of second titanium dioxide-coated micas in each of the above embodiments, it is sufficient that at least ones of the first interference pigments or the second interference pigments contain a plurality of first titanium dioxide-coated micas and a plurality of second titanium dioxide-coated micas. In addition, although the first color pigment chips are first interference pigments of two colors in each of the above embodiments, the first color pigment chips may be first interference pigments of three or more colors, instead. In addition, the first interference pigments of a plurality of colors may be mixed.

### [Experimental Examples]

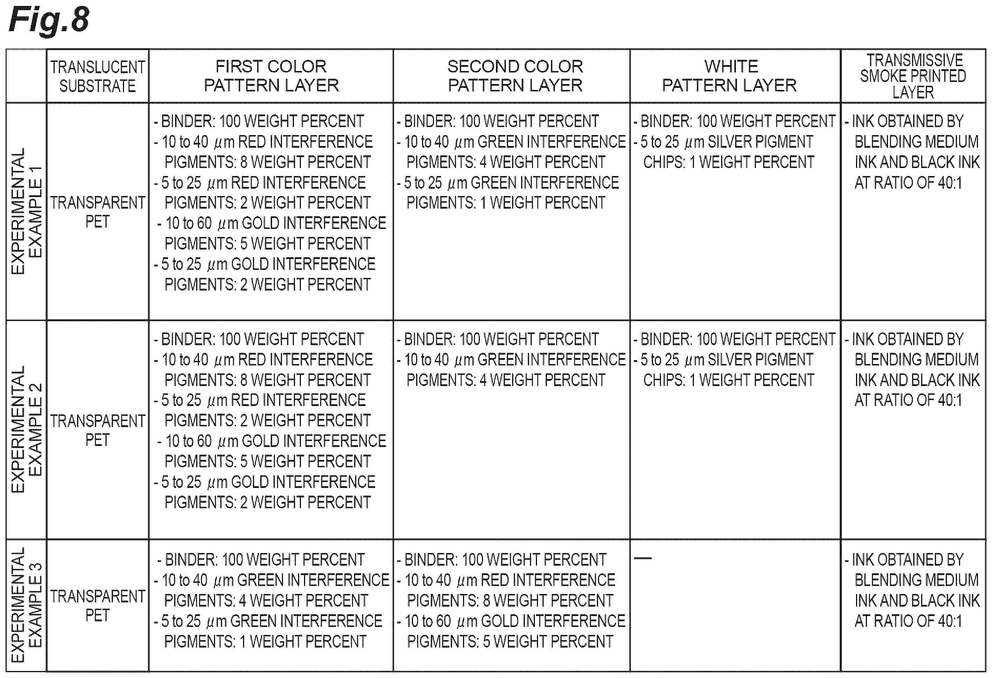

Here, a tendency of appearance of an image on a liquid crystal monitor and a pattern, based on the particle size of the titanium dioxide-coated micas included in the pattern printed layer will be described using experimental examples. As illustrated in FIG. 8 and Experimental Examples 1 to 3 described later, each printed object in which the particle size of the titanium dioxide-coated micas was adjusted was prepared. FIG. 8 is a table showing configurations of printed objects in Experimental Examples 1 to 3. A liquid crystal monitor was installed on a back surface side (transmissive smoke printed layer side) of each of the printed objects in Experimental Examples 1 to 3. A distance between the printed object and the liquid crystal monitor was 2 mm. Visibility of the liquid crystal monitor in a power-on state and a power-off state (items 1 to 4 described later) was evaluated. Four persons performed sensory evaluation for items 1 to 4 and an average of these scores was calculated.

### <Experimental Example 1>

A printed object was prepared by sequentially providing a first color pattern layer, a second color pattern layer, a white pattern layer, and a transmissive smoke printed layer on a transparent substrate that was transparent PET. In Experimental Example 1, a first color pattern layer was formed by a screen printing technique using an ink containing a first color binder (urethane-based resin) and red interference pigments and gold interference pigments dispersed in the first color binder. As for a content ratio of the red interference pigments and the gold interference pigments, red interference pigments having a particle size of 10 to 40 µm were 8 weight percent, red interference pigments having a particle size of 5 to 25 µm were 2 weight percent, gold interference pigments having a particle size of 10 to 60 µm were 5 weight percent, and gold interference pigments having a particle size of 5 to 25 µm were 2 weight percent when the first color binder was assumed to be 100 weight percent.

In Experimental Example 1, a second color pattern layer was formed by a screen printing technique using an ink containing a second color binder (urethane-based resin) and green interference pigments dispersed in the second color binder. As for a content ratio of the green interference pigments, green interference pigments having a particle size of 10 to 40 µm were 4 weight percent and green interference pigments having a particle size of 5 to 25 µm were 1 weight percent when the second color binder was assumed to be 100 weight percent. The red interference pigments, the gold interference pigments, and the green interference pigments were all titanium dioxide-coated mica.

In Experimental Example 1, a white pattern layer was formed by a screen printing technique using an ink containing a silver binder (urethane-based resin) and silver pigment chips dispersed in the silver binder. As for a content ratio of the silver pigment chips, silver pigment chips having a particle size of 5 to 25 µm were 1 weight percent when the silver binder was assumed to be 100 weight percent. Furthermore, a transmissive smoke printed layer was formed by a screen printing technique using an ink obtained by blending a medium ink and a black ink at a ratio of 40:1.

### <Experimental Example 2>

A printed object was prepared by sequentially providing a first color pattern layer, a second color pattern layer, a white pattern layer, and a transmissive smoke printed layer on a transparent substrate that was transparent PET. In Experimental Example 2, a first color pattern layer was formed by a screen printing technique using an ink containing a first color binder (urethane-based resin) and red interference pigments and gold interference pigments dispersed in the first color binder. As for a content ratio of the red interference pigments and the gold interference pigments, red interference pigments having a particle size of 10 to 40 µm were 8 weight percent, red interference pigments having a particle size of 5 to 25 µm were 2 weight percent, gold interference pigments having a particle size of 10 to 60 µm were 5 weight percent, and gold interference pigments having a particle size of 5 to 25 µm were 2 weight percent when the first color binder was assumed to be 100 weight percent.

In Experimental Example 2, a second color pattern layer was formed by a screen printing technique using an ink containing a second color binder (urethane-based resin) and green interference pigments dispersed in the second color binder. As for a content ratio of the green interference pigments, green interference pigments having a particle size of 10 to 40 µm were 4 weight percent when the second color binder was assumed to be 100 weight percent. The red interference pigments, the gold interference pigments, and the green interference pigments were all titanium dioxide-coated mica.

In Experimental Example 2, a white pattern layer was formed by a screen printing technique using an ink containing a silver binder (urethane-based resin) and silver pigment chips dispersed in the silver binder. As for a content ratio of the silver pigment chips, silver pigment chips having a particle size of 5 to 25 µm were 1 weight percent when the silver binder was assumed to be 100 weight percent. Furthermore, a transmissive smoke printed layer was formed by a screen printing technique using an ink obtained by blending a medium ink and a black ink at a ratio of 40:1.

### <Experimental Example 3>

A printed object was prepared by sequentially providing a first color pattern layer, a second color pattern layer, and a transmissive smoke printed layer on a transparent substrate that was transparent PET. In Experimental Example 3, a first color pattern layer was formed by a screen printing technique using an ink containing a first color binder (urethane-based resin) and green interference pigments dispersed in the first color binder. As for a content ratio of the green interference pigments, green interference pigments having a particle size of 10 to 40 µm were 4 weight percent and green interference pigments having a particle size of 5 to 25 µm were 1 weight percent when the first color binder was assumed to be 100 weight percent.

In Experimental Example 3, a second color pattern layer was formed by a screen printing technique using an ink containing a second color binder (urethane-based resin) and red interference pigments and gold interference pigments dispersed in the second color binder. As for a content ratio of the red interference pigments and the gold interference pigments, red interference pigments having a particle size of 10 to 40 µm were 8 weight percent and gold interference pigments having a particle size of 10 to 60 µm were 5 weight percent when the second color binder was assumed to be 100 weight percent.

In Experimental Example 3, a transmissive smoke printed layer was formed by a screen printing technique using an ink obtained by blending a medium ink and a black ink at a ratio of 40:1.

### <Item 1: Clarity of Display Content>

Clarity of an image and text displayed on the liquid crystal monitor when the liquid crystal monitor was turned on was evaluated.

### <Score>

5 points: The pattern has a weak presence with respect to the image and the text displayed on the liquid crystal monitor, and the image and the text are clearly viewed.

3 points: The pattern has a somewhat strong presence with respect to the image and the text displayed on the liquid crystal monitor, and appears faintly over the image and the text.

1 point: The pattern has a strong presence with respect to the image and the text displayed on the liquid crystal monitor, and appears over the image and the text.

### <Item 2: Luminance of Display Content>

Luminance of an image and text displayed on the liquid crystal monitor when the liquid crystal monitor was turned on was evaluated.

### <Score>

5 points: The image and the text displayed on the liquid crystal monitor look bright.

3 points: The image and the text displayed on the liquid crystal monitor look slightly dark.

1 point: The image and the text displayed on the liquid crystal monitor look fairly dark.

### <Item 3: Effect of Black Liquid Crystal Monitor>

An effect of a black liquid crystal monitor on the pattern when the liquid crystal monitor was turned off was evaluated.

### <Score>

5 points: There is no effect of the black liquid crystal monitor, and the pattern can be sufficiently visually recognized.

3 points: The effect of the black liquid crystal monitor is slightly observed, and the pattern looks slightly dark and sunk (slightly high transparency).

1 point: The effect of the black liquid crystal monitor is observed, and the pattern looks fairly dark and sunk (high transparency).

### <Item 4: Color Vibrancy of Pattern>

Color vibrancy of the pattern when the liquid crystal monitor was turned off was evaluated.

### <Score>

5 points: The color vibrancy of the pattern is high.

3 points: The color vibrancy of the pattern is slightly low, and the color of the pattern looks light (whitish).

1 point: The color vibrancy of the pattern is low, and the color of the pattern looks white.

Results of the sensory evaluation of items 1 to 4 in Experimental Examples 1 to 3 are shown in Table 1 below. Note that examples that received a score of 3 or more for any items were determined to have a level of practicality that is acceptable. It was found from Experimental Example 1 that the effect of the black liquid crystal monitor on the pattern was considerably low, and the visibility of the pattern tended to be expressed at a sufficiently high level. In addition, high evaluation results were also obtained for the color vibrancy of the pattern and the clarity and luminance of image and text display. It was found from Experimental Examples 2 and 3, on the other hand, that while the effect of the black liquid crystal monitor on the pattern was kept low, the color vibrancy of the pattern and the clarity and luminance of the image and text display tended to be generally high.

**[Table 1]**

| | Item 1 | Item 2 | Item 3 | Item 4 |
|---|---|---|---|---|
| Experimental Example 1 | 4 | 4 | 4.5 | 4 |
| Experimental Example 2 | 4.25 | 4 | 4.25 | 4 |
| Experimental Example 3 | 4.25 | 4.25 | 4 | 4.25 |

### [Third Disclosure]

The printed object described in Japanese Patent No. 5725581 includes a first color pattern layer, a second color pattern layer, and a third color pattern layer, and pigment chips included in each pattern layer are any of red interference pigments, green interference pigments, and blue interference pigments. In this printed object, the number of pattern layers is larger in order to make colors more vibrant than in conventional printing. The decorative sheet described in Japanese Patent No. 6839319 includes a first design layer containing a plurality of types of interference pigments and exhibiting a first color mixture, and a second design layer containing a plurality of types of interference pigments and exhibiting a second color mixture different from the first color mixture.

Here, depending on a pattern to be expressed by a printed object, when pigments of a large number of colors are adjusted and expressed as described above, the color adjustment operation and the registration operation at the time of printing might be complicated.

The present disclosure is intended to solve the above-described problems, and an object thereof is to provide a printed object that can simplify the color adjustment operation and the registration operation at the time of printing.
[1] The present disclosure relates, in one aspect, to a printed object including a light transmissive base material and a pattern printed layer. In this printed object, the pattern printed layer includes a first color pattern layer provided on one surface of the light transmissive base material and including a plurality of first color dots, and a second color pattern layer provided on the first color pattern layer and including a plurality of second color dots. In this printed object, each of the plurality of first color dots includes a first color binder and a plurality of first color pigment chips dispersed in the first color binder. Each of the plurality of second color dots includes a second color binder and a plurality of second color pigment chips dispersed in the second color binder. The plurality of first color pigment chips is first interference pigments that generate first interference light of a single color. The plurality of second color pigment chips is second interference pigments that generate second interference light of a single color different from the color exhibited by the first interference pigments. The first interference light and the second interference light are additively mixed.
   In this printed object, the first color pattern layer contains first interference pigments that generate first interference light of a single color, and the second color pattern layer contains second interference pigments that generate second interference light of a single color different from the color exhibited by the first interference pigments. For example, with respect to a pattern that can be expressed with a small number of colors, the pattern can be expressed only by adjusting intensity of single colors by narrowing the interference pigments contained in the first color pattern layer and the second color pattern layer to the single colors. The color adjustment operation and the registration operation at the time of printing can thus be simplified. With the printed object, therefore, the color adjustment operation and the registration operation at the time of printing can be simplified.
[2] The printed object according to [1] may further include a white pattern layer provided on the second color pattern layer and including a plurality of silver dots. Each of the plurality of silver dots may include a silver binder and a plurality of silver pigment chips dispersed in the silver binder. In this case, the color vibrancy of the first color pattern layer and the second color pattern layer is excellent, and the pattern printed layer can have a pattern that looks whitish.
[3] The printed object according to [1] or [2] may further include a transmissive smoke printed layer provided on an outermost surface of the pattern printed layer on a side opposite a light transmissive base material side. In this case, the color vibrancy of the first color pattern layer and the second color pattern layer is more excellent. Furthermore, since the transmissive smoke printed layer has transparency, a decrease in visibility of an image on the display device is favorably suppressed.
[4] The present disclosure relates, in another aspect, to a display device. The display device includes the printed object according to any one of [1] to [3], and a light source. With the display device, when the light source is turned off, the pattern of the pattern printed layer is visually recognized, and when the light source is turned on, transmitted light (pattern display, image display, etc.) from the light source is visually recognized.
[5] In the display device according to [4], the light source may be a display. With the display device, when the display is turned off, the pattern of the pattern printed layer is visually recognized, and when the display is turned on, transmitted light (pattern display, image display, etc.) from the display is visually recognized.

According to the present disclosure, it is possible to provide a printed object that can simplify the color adjustment operation and the registration operation at the time of printing.

Specific examples of a display device according to embodiments of the present disclosure will be described hereinafter with reference to the drawings. Note that the present disclosure is not limited to these examples but is indicated by the claims, and is intended to include all modifications within a meaning and a scope equivalent to the claims. In the following description, the same elements will be given the same reference numerals in the description of the drawings, and redundant description thereof is omitted.

### [Embodiment 3-1]

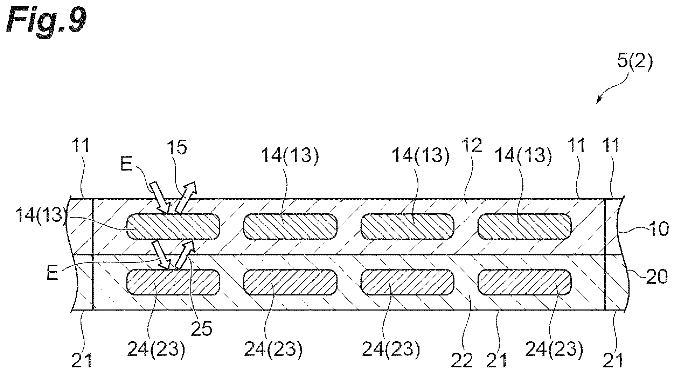

As a printed object and a display device according to the present embodiment, the same configuration as that illustrated in FIG. 1 may be employed. In the printed object and the display device according to the present embodiment, therefore, description of the same components as those of the printed object and the display device according to Embodiment 1-1 is omitted. In the printed object and the display device according to the present embodiment, a layer configuration illustrated in FIG. 9 is employed instead of the layer configuration illustrated in FIG. 2.

The first color pattern layer 10 can be provided on the surface 4a through, for example, screen printing, inkjet printing, gravure printing, or offset printing. As illustrated in FIG. 9, the first color pattern layer 10 includes a plurality of first color dots 11. Here, the "dots" mean spots that are elements constituting a printed image, and a shape thereof is not limited to a circle, and may be a rectangle, a polygon, or another shape. Each of the plurality of first color dots 11 includes a first color binder 12 and a plurality of first color pigment chips 13 dispersed in the first color binder 12. A content ratio of the plurality of first color pigment chips 13 is, for example, in a range of 0.5 weight percent to 20 weight percent when the first color binder 12 is assumed to be 100 weight percent. In this case, it is possible to suppress deterioration of the coating property and transparency of the first color pattern layer 10 while favorably expressing the pattern of the first color pattern layer 10.

In Embodiment 3-1, the plurality of first color pigment chips 13 is interference pigments 14 (first interference pigments) that generate interference light of a predetermined single color. The interference pigments 14 include flakes (not illustrated) having visible light transmittance and metal oxide films (not illustrated) covering the flakes. Of light incident on the first color pattern layer 10 from a light transmissive base material 4 side, light reflected from surfaces of the metal oxide films and light passing through the metal oxide films and reflected from surfaces of the flakes interfere with each other to generate interference light. By adjusting film thickness of the metal oxide films and a refractive index of the metal oxide films, interference light having a desired wavelength can be generated.

When the incident light E enters the first color pattern layer 10, interference light 15 (first interference light) of a single color is generated from the interference pigments 14. The interference pigments 14 thus exhibit the single color.

The second color pattern layer 20 can be provided on the first color pattern layer 10 through, for example, screen printing, inkjet printing, gravure printing, or offset printing. As illustrated in FIG. 9, the second color pattern layer 20 includes a plurality of second color dots 21. Here, the "dots" mean spots that are elements constituting a printed image, and a shape thereof is not limited to a circle, and may be a rectangle, a polygon, or another shape. Each of the plurality of second color dots 21 includes a second color binder 22 and a plurality of second color pigment chips 23 dispersed in the second color binder 22. A content ratio of the plurality of second color pigment chips 23 is, for example, in a range of 0.5 weight percent to 20 weight percent when the second color binder 22 is assumed to be 100 weight percent. It is possible to suppress deterioration of the coating property and transparency of the second color pattern layer 20 while favorably expressing the pattern of the second color pattern layer 20.

When the incident light E enters the second color pattern layer 20, interference light 25 (second interference light) of a single color is generated from the interference pigments 24 (second interference pigments). The interference pigments 24 thus exhibit the single color. The interference pigments 24 may be any interference pigments that generate the interference light 25 of a single color different from the color indicated by the interference pigments 14.

Total light transmittance of the printed object 2 is, for example, 30% to 70%. The total light transmittance referred to herein means a value obtained by measuring total light transmittance using a spectrophotometer (for example, spectrophotometer UV-2100 manufactured by Shimadzu Corporation). When the total light transmittance is 30% or more and the printed object 2 is placed in front of a screen, the pattern printed layer 5 becomes difficult to be visually recognized due to light of an image on the screen, and the image is more clearly recognized visually. When the total light transmittance is 70% or less, the pattern of the pattern printed layer 5 can be suppressed from appearing dark even if the screen is black.

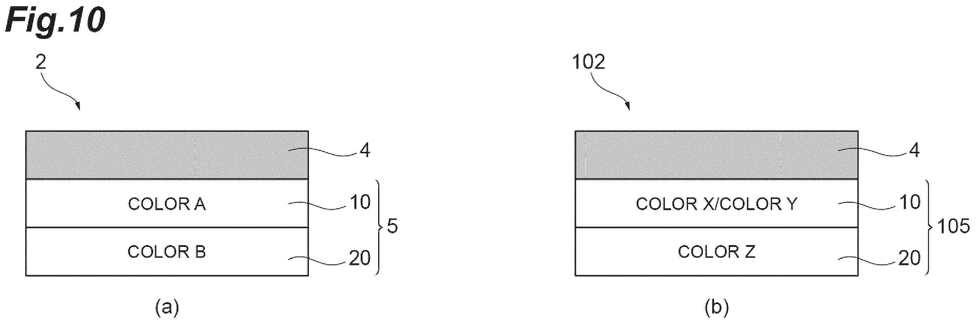

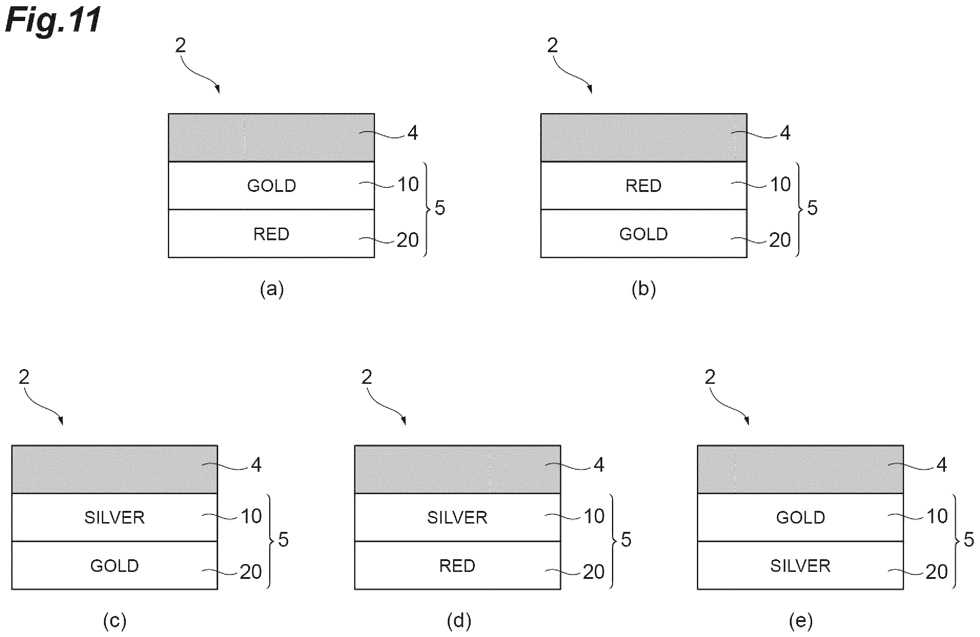

Next, combinations of colors in the pattern printed layer 5 will be described with reference to FIGS. 10 and 11. FIG. 10(a) is a schematic diagram illustrating a combination of colors in the pattern printed layer 5. FIG. 10(b) is a schematic diagram illustrating a combination of colors in a pattern printed layer 105 in a comparative example. FIG. 11 is a schematic diagram illustrating specific examples of combinations of colors in the pattern printed layer 5.

As illustrated in FIG. 10(a), the first color pattern layer 10 contains interference pigments of a single color "color A", and interference light of the single color "color A" is generated. The second color pattern layer 20 contains interference pigments of a single color "color B", and interference light of the single color "color B" is generated. Color B is different from color A. In the printed object 2, therefore, a pattern is expressed by additively mixing the interference light of color A and the interference light of color B.

In the example illustrated in FIG. 11(a), "gold" is employed as color A of the first color pattern layer 10, and "red" is employed as color B of the second color pattern layer 20. The printed object 2 may express a woodgrain pattern as the pattern by additively mixing gold and red. Since the first color pattern layer 10 is gold, it is possible to express light-colored woodgrain. Note that, in this case, the interference pigments 14 illustrated in FIG. 9 are, for example, gold interference pigments (gold pearl pigments). The interference light 15 exhibits gold. The interference pigments 24 are, for example, red interference pigments (red pearl pigments). The interference light 25 exhibits red.

In the example illustrated in FIG. 11(b), "red" is employed as color A of the first color pattern layer 10, and "gold" is employed as color B of the second color pattern layer 20. The printed object 2 may express a woodgrain pattern as the pattern by additively mixing red and gold. Since the first color pattern layer 10 is red, it is possible to express slightly reddish woodgrain.

In the example illustrated in FIG. 11(c), "silver" is employed as color A of the first color pattern layer 10, and "gold" is employed as color B of the second color pattern layer 20. The printed object 2 may express a hairline pattern as the pattern by additively mixing silver and gold. Since the second color pattern layer 20 is gold, normal stainless hairlines can be adjusted to a gold tone. Note that the interference pigments 14 illustrated in FIG. 9 are, for example, silver interference pigments (silver pearl pigments). The interference light 15 exhibits silver.

In the example illustrated in FIG. 11(d), "silver" is employed as color A of the first color pattern layer 10, and "red" is employed as color B of the second color pattern layer 20. The printed object 2 may express a hairline pattern as the pattern by additively mixing silver and red. Since the second color pattern layer 20 is red, stainless hairlines can be adjusted to a bronze tone.

In the example illustrated in FIG. 11(e), "gold" is employed as color A of the first color pattern layer 10, and "silver" is employed as color B of the second color pattern layer 20. The printed object 2 may express a hairline pattern as the pattern by additively mixing gold and silver. Since the first color pattern layer 10 is gold (or a color including gold), a finish emphasizing a gold tone can be obtained.

In the printed object 2 according to Embodiment 3-1 described above, the first color pattern layer 10 contains the interference pigments 14 that generate the interference light 15 of a single color, and the second color pattern layer 20 contains the interference pigments 24 that generate the interference light 25 of a single color different from the color exhibited by the interference pigments 14. Here, as illustrated in FIG. 10(b), a printed object 102 in which the first color pattern layer 10 contains interference pigments of color X and color Y and the second color pattern layer 20 contains interference pigments of color Z is taken as a comparative example. For example, when a pattern described with reference to FIG. 11 is expressed with the configuration in the comparative example, it is necessary to adjust the three colors of colors X, Y, and Z, and it takes time and effort to perform the color adjustment operation and the registration operation at the time of printing. As for a pattern that can be expressed with a small number of colors as in FIG. 11, on the other hand, the pattern can be expressed only by adjusting intensity of single colors by narrowing the interference pigments contained in the first color pattern layer 10 and the second color pattern layer 20 to the single colors as in the printed object 2 according to the present embodiment. The color adjustment operation and the registration operation at the time of printing can thus be simplified. With the printed object 2, therefore, the color adjustment operation and the registration operation at the time of printing can be simplified.

In the third disclosure, too, the configuration according to any of Embodiments 1-2 to 1-4 in the first disclosure may be employed.

### [Fourth Disclosure]

The printed object described in Japanese Patent No. 5725581 includes a first color pattern layer, a second color pattern layer, and a third color pattern layer, and pigment chips included in each pattern layer are any of red interference pigments, green interference pigments, and blue interference pigments. In this printed object, the number of pattern layers is larger in order to make colors more vibrant than in conventional printing. The decorative sheet described in Japanese Patent No. 6839319 includes a first design layer containing a plurality of types of interference pigments and exhibiting a first color mixture, and a second design layer containing a plurality of types of interference pigments and exhibiting a second color mixture different from the first color mixture.

Here, depending on a pattern to be expressed by a printed object, when pigments of a large number of colors are adjusted and expressed as described above, the color adjustment operation and the registration operation at the time of printing might be complicated.

The present invention is intended to solve the above-described problems, and an object thereof is to provide a printed object that can simplify the color adjustment operation and the registration operation at the time of printing.
[1] The present invention relates, in one aspect, to a printed object including a light transmissive base material and a pattern printed layer. In this printed object, the pattern printed layer includes a first color pattern layer provided on one surface of the light transmissive base material and including a plurality of first color dots, and a second color pattern layer provided on the first color pattern layer and including a plurality of second color dots. In this printed object, each of the plurality of first color dots includes a first color binder and a plurality of first color pigment chips dispersed in the first color binder. Each of the plurality of second color dots includes a second color binder and a plurality of second color pigment chips dispersed in the second color binder. The plurality of first color pigment chips or the plurality of second color pigment chips are first interference pigments of a plurality of colors that generate beams of first interference light different from each other. Another of the plurality of first color pigment chips and the plurality of second color pigment chips is second interference pigments that generate second interference light of a single color that is the same color as that of any of the plurality of first interference pigments. The plurality of beams of first interference light and the second interference light are additively mixed.
   In this printed object, since any one of the first color pattern layer and the second color pattern layer contains interference pigments of a plurality of colors that generate beams of interference light different from each other, it is possible to express a pattern having a three-dimensional effect even with a small number of printed layers. Furthermore, in the printed object, since a pattern layer containing interference pigments that generate a plurality of beams of interference light may be one of the first color pattern layer and the second color pattern layer, the color adjustment operation and the registration operation at the time of printing can be simplified. Another of the first color pattern layer and the second color pattern layer, on the other hand, contains second interference pigments that generate second interference light of a single color that is the same color as that of any of the plurality of first interference pigments. For example, with respect to a pattern that can be expressed with a small number of colors, the pattern can be expressed by adjusting intensity of a single color by narrowing the second interference pigments to the single color that is the same color as that of any of the first interference pigments. In addition, when it is desired to emphasize a certain hue, it is easier to adjust the hue using both the first color pattern layer and the second color pattern layer than using only one color pattern layer. In addition, when interference pigments are excessively added to one color pattern layer, strength of a coating film decreases, but when the two color pattern layers are used, the decrease in strength can be suppressed. As described above, the color adjustment operation and the registration operation at the time of printing can be simplified.
[2] The printed object according to [1] may further include a white pattern layer provided on the second color pattern layer and including a plurality of silver dots, and each of the plurality of silver dots may include a silver binder and a plurality of silver pigment chips dispersed in the silver binder. In this case, the color vibrancy of the first color pattern layer and the second color pattern layer is excellent, and the pattern printed layer can have a pattern that looks whitish.
[3] The printed object according to [1] or [2] may further include a transmissive smoke printed layer provided on an outermost surface of the pattern printed layer on a side opposite a light transmissive base material side. In this case, the color vibrancy of the first color pattern layer and the second color pattern layer is more excellent. Furthermore, since the transmissive smoke printed layer has transparency, a decrease in visibility of an image on the display device is favorably suppressed.
[4] The present invention relates, in another aspect, to a display device. The display device includes the printed object according to any one of [1] to [3], and a light source. With the display device, when the light source is turned off, the pattern of the pattern printed layer is visually recognized, and when the light source is turned on, transmitted light (pattern display, image display, etc.) from the light source is visually recognized.
[5] In the display device according to [4], the light source may be a display. With the display device, when the display is turned off, the pattern of the pattern printed layer is visually recognized, and when the display is turned on, transmitted light (pattern display, image display, etc.) from the display is visually recognized.

According to the present invention, it is possible to provide a printed object that can simplify the color adjustment operation and the registration operation at the time of printing.

Specific examples of the display device according to embodiments of the present invention will be described hereinafter with reference to the drawings. Note that the present invention is not limited to these examples but is indicated by the claims, and is intended to include all modifications within a meaning and a scope equivalent to the claims. In the following description, the same elements will be given the same reference numerals in the description of the drawings, and redundant description thereof is omitted.

### [Embodiment 4-1]

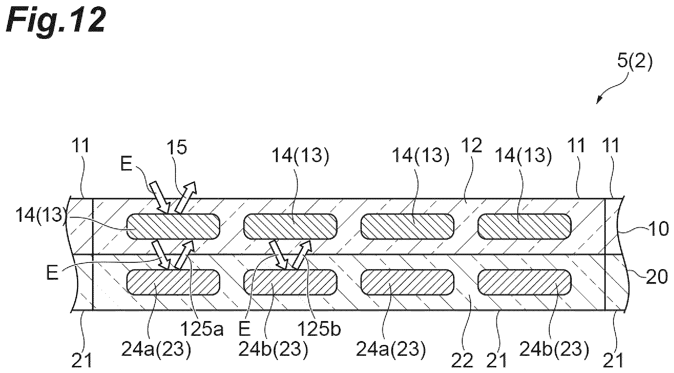

As a printed object and a display device according to the present embodiment, the same configuration as that illustrated in FIG. 1 may be employed. In the printed object and the display device according to the present embodiment, therefore, description of the same components as those of the printed object and the display device according to Embodiment 1-1 is omitted. In the printed object and the display device according to the present embodiment, a layer configuration illustrated in FIG. 12 is employed instead of the layer configuration illustrated in FIG. 2.

The first color pattern layer 10 can be provided on the surface 4a through, for example, screen printing, inkjet printing, gravure printing, or offset printing. As illustrated in FIG. 12, the first color pattern layer 10 includes a plurality of first color dots 11. Here, the "dots" mean spots that are elements constituting a printed image, and a shape thereof is not limited to a circle, and may be a rectangle, a polygon, or another shape. Each of the plurality of first color dots 11 includes a first color binder 12 and a plurality of first color pigment chips 13 dispersed in the first color binder 12. A content ratio of the plurality of first color pigment chips 13 is, for example, in a range of 0.5 weight percent to 20 weight percent when the first color binder 12 is assumed to be 100 weight percent. In this case, it is possible to suppress deterioration of the coating property and transparency of the first color pattern layer 10 while favorably expressing the pattern of the first color pattern layer 10.

In Embodiment 4-1, the plurality of first color pigment chips 13 is interference pigments 14 (second interference pigments) that generate interference light of a predetermined single color. The interference pigments 14 have the same color as any of the interference pigments 24a and 24b (first interference pigments) described later. The interference pigments 14 include flakes (not illustrated) having visible light transmittance and metal oxide films (not illustrated) covering the flakes. Of light incident on the first color pattern layer 10 from a light transmissive base material 4 side, light reflected from surfaces of the metal oxide films and light passing through the metal oxide films and reflected from surfaces of the flakes interfere with each other to generate interference light. By adjusting film thickness of the metal oxide films and a refractive index of the metal oxide films, interference light having a desired wavelength can be generated.

When the incident light E enters the first color pattern layer 10, interference light 15 (second interference light) of a single color is generated from the interference pigments 14. The interference pigments 14 thus exhibit the single color.

The second color pattern layer 20 can be provided on the first color pattern layer 10 through, for example, screen printing, inkjet printing, gravure printing, or offset printing. As illustrated in FIG. 12, the second color pattern layer 20 includes a plurality of second color dots 21. Here, the "dots" mean spots that are elements constituting a printed image, and a shape thereof is not limited to a circle, and may be a rectangle, a polygon, or another shape. Each of the plurality of second color dots 21 includes a second color binder 22 and a plurality of second color pigment chips 23 dispersed in the second color binder 22. A content ratio of the plurality of second color pigment chips 23 is, for example, in a range of 0.5 weight percent to 20 weight percent when the second color binder 22 is assumed to be 100 weight percent. It is possible to suppress deterioration of the coating property and transparency of the second color pattern layer 20 while favorably expressing the pattern of the second color pattern layer 20.

In Embodiment 4-1, the plurality of second color pigment chips 23 is interference pigments 24a and 24b of a plurality of colors that generate beams of interference light different from each other. Each of the interference pigments 24a and 24b includes flakes (not illustrated) having visible light transmittance and metal oxide films (not illustrated) covering the flakes. Of light incident on the second color pattern layer 20 from the light transmissive base material 4 side, light reflected from surfaces of the metal oxide films and light passing through the metal oxide films and reflected from surfaces of the flakes interfere with each other to generate interference light. By adjusting film thickness of the metal oxide films and a refractive index of the metal oxide films, interference light having a desired wavelength can be generated.

In Embodiment 4-1, the interference pigments 24a and 24b are titanium dioxide-coated mica. A particle size range of the titanium dioxide-coated mica includes, for example, a range of 25 µm or more and 60 µm or less. Note that, here, the "particle size" means the largest diameter of a particle cross section. The flakes constituting the interference pigments 24a and 24b may be other than mica, and may be, for example, silica, alumina, glass, or a polysilicate, instead. The metal oxide films constituting the interference pigments 24a and 24b may be other than titanium dioxide, and may be, for example, zirconium oxide, zinc oxide, iron oxide, or tin oxide, instead.

When the incident light E is incident on the second color pattern layer 20, beams of interference light 125a and 125b (first interference light) different from each other are generated from each of the interference pigments 24a and 24b. That is, wavelengths of the beams of interference light 125a and 125b are different from each other. The interference pigments 24a and 24b thus exhibit a color mixture. Blending amounts of the interference pigments 24a and 24b may be the same or different from each other. The interference pigments 24a may be any interference pigments that generate the interference light 125a of the same single color as that exhibited by the interference pigments 14. Note that the interference pigments 24b may be interference pigments that generate the interference light 126b of the same single color as that exhibited by the interference pigments 14.

Total light transmittance of the printed object 2 is, for example, 30% to 70%. The total light transmittance referred to herein means a value obtained by measuring total light transmittance using a spectrophotometer (for example, spectrophotometer UV-2100 manufactured by Shimadzu Corporation). When the total light transmittance is 30% or more and the printed object 2 is placed in front of a screen, the pattern printed layer 5 becomes difficult to be visually recognized due to light of an image on the screen, and the image is more clearly recognized visually. When the total light transmittance is 70% or less, the pattern of the pattern printed layer 5 can be suppressed from appearing dark even if the screen is black.

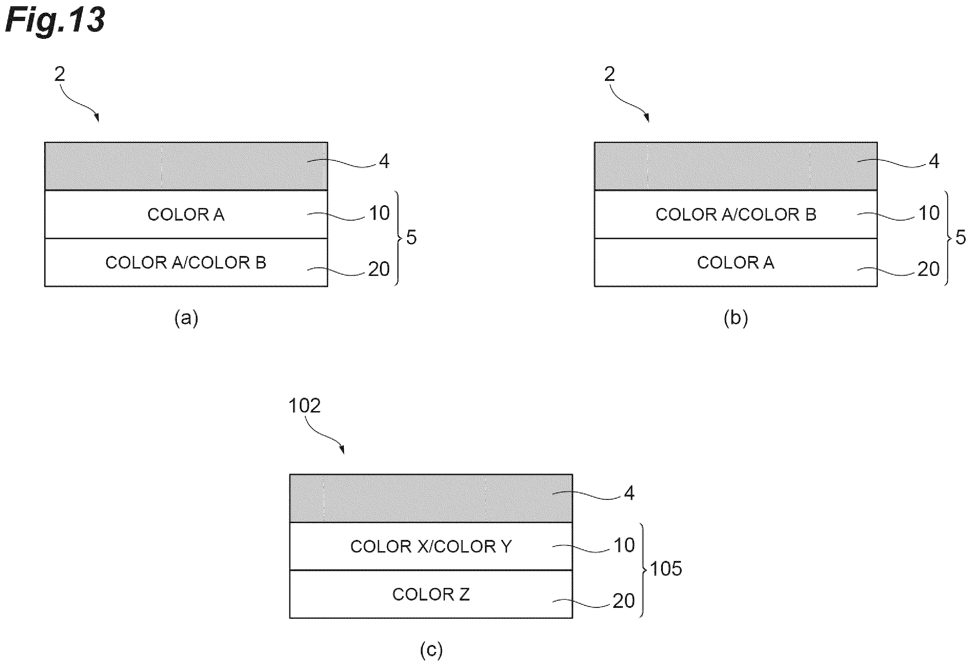

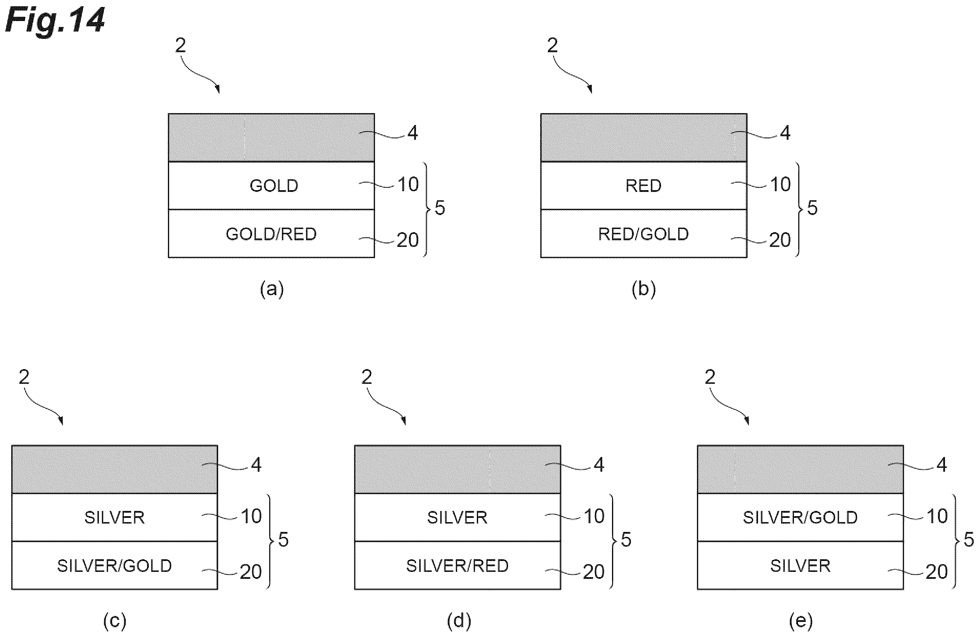

Next, combinations of colors in the pattern printed layer 5 will be described with reference to FIGS. 13 and 14. FIGS. 13(a) and (b) are schematic diagrams illustrating combinations of colors in the pattern printed layer 5. FIG. 13(c) is a schematic diagram illustrating a combination of colors in the pattern printed layer 105 in a comparative example. FIG. 14 is a schematic diagram illustrating specific examples of combinations of colors in the pattern printed layer 5.

As illustrated in FIG. 13(a), the first color pattern layer 10 contains interference pigments of a single color "color A", and interference light of the single color "color A" is generated. The second color pattern layer 20 contains interference pigments of a single color "color A" and a single color "color B", and interference light of a color mixture of "color A" and "color B" is generated. Color B is different from color A. In the printed object 2, therefore, a pattern is expressed by additively mixing the interference light of color A and the interference light of color A and color B.

Alternatively, as illustrated in FIG. 13(b), the second color pattern layer 20 contains the interference pigments of the single color "color A", and the interference light of the single color "color A" is generated. The first color pattern layer 10 contains interference pigments of a single color "color A" and a single color "color B", and interference light of a color mixture of "color A" and "color B" is generated. Color B is different from color A. In the printed object 2, therefore, a pattern is expressed by additively mixing the interference light of color A and the interference light of color A and color B.

In the example illustrated in FIG. 14(a), "gold" is employed as color A of the first color pattern layer 10, "gold" and "red" are employed as color A and color B of the second color pattern layer 20, respectively. The printed object 2 may express a woodgrain pattern as the pattern by additively mixing gold and red. Since the first color pattern layer 10 is gold, it is possible to express light-colored woodgrain. Note that, in this case, the interference pigments 14 and the interference pigments 24a illustrated in FIG. 12 are, for example, gold interference pigments (gold pearl pigments). The interference light 15 and the interference light 125a exhibit gold. The interference pigments 24b are, for example, red interference pigments (red pearl pigments). The interference light 126b exhibits red.

In the example illustrated in FIG. 14(b), "red" is employed as color A of the first color pattern layer 10, "red" and "gold" are employed as color A and color B of the second color pattern layer 20, respectively. The printed object 2 may express a woodgrain pattern as the pattern by additively mixing red and gold. Since the first color pattern layer 10 is red, it is possible to express slightly reddish woodgrain.

In the example illustrated in FIG. 14(c), "silver" is employed as color A of the first color pattern layer 10, "silver" and "gold" are employed as color A and color B of the second color pattern layer 20, respectively. The printed object 2 may express a hairline pattern as the pattern by additively mixing silver and gold. Since the second color pattern layer 20 contains gold, normal stainless hairlines can be adjusted to a gold tone. Note that the interference pigments 14 and the interference pigments 24a illustrated in FIG. 12 are, for example, silver interference pigments (silver pearl pigments). The interference light 15 and the interference light 126a are silver.

In the example illustrated in FIG. 14(d), "silver" is employed as color A of the first color pattern layer 10, "silver" and "red" are employed as color A and color B of the second color pattern layer 20, respectively. The printed object 2 may express a hairline pattern as the pattern by additively mixing silver and red. Since the second color pattern layer 20 contains red, stainless hairlines can be adjusted to a bronze tone.

In the example illustrated in FIG. 14(e), "silver" is employed as color A and "gold" is employed as color B of the first color pattern layer 10, and "silver" is employed as color A of the second color pattern layer 20, respectively. The printed object 2 may express a hairline pattern as the pattern by additively mixing gold and silver. Since the first color pattern layer 10 contains gold (or a color including gold), a finish emphasizing a gold tone can be obtained.

In the printed object 2 according to Embodiment 4-1 described above, one of the first color pattern layer 10 and the second color pattern layer 20 contains the interference pigments of the plurality of colors that generate the interference light of color A and color B different from each other, and pattern expression with a three-dimensional effect can be achieved even with a small number of printed layers. Furthermore, in the printed object 2, since a pattern layer containing interference pigments that generate a plurality of beams of interference light may be one of the first color pattern layer 10 and the second color pattern layer 20, the color adjustment operation and the registration operation at the time of printing can be simplified. The other of the first color pattern layer 10 and the second color pattern layer 20, on the other hand, contains interference pigments that generate interference light of the same single color A as any that exhibited by any of the plurality of interference pigments. Here, as illustrated in FIG. 13(c), a printed object 102 in which the first color pattern layer 10 contains interference pigments of color X and color Y and the second color pattern layer 20 contains interference pigments of color Z is taken as a comparative example. For example, when a pattern described with reference to FIG. 14 is expressed with the configuration in the comparative example, it is necessary to adjust the three colors of colors X, Y, and Z, and it takes time and effort to perform the color adjustment operation and the registration operation at the time of printing. As for a pattern that can be expressed with a small number of colors as in FIG. 14, on the other hand, the pattern can be expressed only by adjusting intensity of the single color A by narrowing the interference pigments of the first color pattern layer 10 and the interference pigments of the second color pattern layer 20 to the single color A. In addition, when it is desired to emphasize a hue of color A, it is easier to adjust the hue using both the first color pattern layer 10 and the second color pattern layer 20 than using only one color pattern layer. In addition, when interference pigments are excessively added to one color pattern layer, strength of a coating film decreases, but when the two color pattern layers 10 and 20 are used, the decrease in strength can be suppressed. As described above, the color adjustment operation and the registration operation at the time of printing can be simplified.

In the fourth disclosure, too, the configuration according to any of Embodiments 1-2 to 1-4 in the first disclosure may be employed.

### [Fifth Disclosure]

Here, in a device including a light source under a printed layer as in Japanese Patent No. 5725581 and Japanese Patent No. 6839319, when the light source is turned off, a surface of the light source becomes black. At this time, a hue of a pattern of the printed layer might be affected by the black color on the surface of the light source. In this state, there is a problem that the pattern looks different from the hue of the actual pattern.

The present disclosure is intended to solve the above-described problem, and an object thereof is to provide a printed object and a display device that can reduce an effect of a color of a light source that has been turned off on visibility of a pattern of a printed layer.
[1] The present disclosure is, in one aspect, a display device including a printed object including a light transmissive base material and a pattern printed layer, and a light source. The printed object includes a reflective layer that reflects light between the pattern printed layer and the light source.
   In this display device, when the light source is turned off, the pattern of the pattern printed layer of the printed object can be visually recognized. In addition, when the light source is turned on, content indicated by light of the light source can be visually recognized. Here, when the light source is turned off, a surface of the light source becomes black. The printed object, on the other hand, includes the reflective layer that reflects light between the pattern printed layer and the light source. The reflective layer, therefore, can reflect light from the outside before the light is incident on the black light source. It is therefore possible to reduce appearance of the black color on the surface of the light source. As described above, an effect of the color of the light source that has been turned off on the visibility of the pattern of the printed layer can be reduced.
[2] In the display device according to [1], total light transmittance of the reflective layer may be 30% to 70%. In this case, it is possible to suppress the light of the light source that has been turned on from being difficult to visually recognize from the outside due to an excessively low total light transmittance of the reflective layer.
[3] In the display device according to [1] or [2], the reflective layer may be formed through vapor deposition of a metal. In this case, the appearance of the black color on the surface of the light source is further reduced, and pattern printing at a time when the light source is turned off can be expressed without a loss. In addition, an effect of forming the reflective layer with a thin film can be produced.
[4] In the display device according to any one of [1] to [3], the reflective layer may be formed of an optical member. In this case, the appearance of the black color on the surface of the light source is further reduced, and pattern printing at a time when the light source is turned off can be expressed without a loss.
[5] The present disclosure relates, in another aspect, to a printed object. This printed object is a printed object disposed in such a way as to cover a light source of a display device, and includes a light transmissive base material, a pattern printed layer, and a reflective layer that is provided on one side of the pattern printed layer and that reflects light. With this printed object, when the printed object is incorporated into the light source of the display device, the same functions and effects as those of the display device described above can be produced.

According to the present disclosure, it is possible to provide a display device and a printed object that can reduce an effect of a color of a light source that has been turned off on visibility of a pattern of a printed layer.

### [Embodiment 5-1]

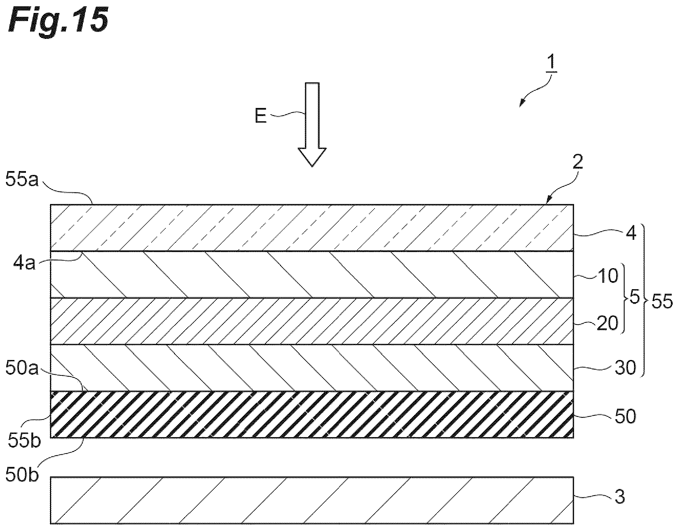

The printed object and the display device according to the present embodiment employ a configuration illustrated in FIG. 15 instead of FIG. 1. As illustrated in FIG. 15, a printed object 2 is a sheet for expressing a pattern, and includes a light transmissive base material 4, a pattern printed layer 5, a transmissive smoke printed layer 30, and a reflective layer 50. Note that, in the printed object 2, the layers other than the reflective layer 50 might be collectively referred to as a main body portion 55. The printed object and the display device according to the present embodiment may employ the same configurations as those of the printed object and the display device according to any of the first to fourth and sixth disclosures except that the reflective layer 50 is added. In the printed object and the display device according to the present embodiment, description of the same components as those of the printed object and the display device according to Embodiment 1-1 is omitted.

The light transmissive base material 4 is a substrate having visible light transmittance. The light transmissive base material 4 is made of, for example, a resin having transparency. Examples of the resin having transparency include PET, PMMA, polycarbonate, polyethylene, polypropylene, and nylon. The light transmissive base material 4 may be a glass substrate. Thickness of the light transmissive base material 4 is, for example, 25 µm to 250 µm, but a substrate having a thickness outside this range can also be used as long as printing is possible. In the case of a glass substrate, thickness is, for example, about 0.5 mm to 10 mm. Note that, if necessary, a surface protective layer may be provided on a front surface side of the light transmissive base material 4 (a side opposite the pattern printed layer 5).

As illustrated in FIG. 15, the reflective layer 50 is provided between the pattern printed layer 5 and the light source 3. The reflective layer 50 is a layer that reflects light. In the present embodiment, the reflective layer 50 is provided on a back surface 55b of the main body portion 55 on a side opposite a front surface 55a on which the incident light L enters. The reflective layer 50 has a front surface 50a on an incident side and a back surface 50b opposite the front surface 50a. The reflective layer 50 has a characteristic of reflecting light incident from a front surface 50a side and transmitting light incident from a back surface 50b side. However, a part of the light incident from the front surface 50a side is absorbed by the reflective layer 50, and a part thereof is transmitted to the light source 3 side.

The reflective layer 50 may be formed through vapor deposition of a metal. In this case, the reflective layer 50 includes a film formed by vapor depositing a metal on a transparent film. Examples of the metal for the vapor deposition include Sn, In, and Al. Alternatively, the reflective layer 50 may include an optical member. The optical member is a member having reflection performance, and examples thereof include TiO₂ and SiO₂. In addition, the reflective layer 50 may be configured by stacking a plurality of resin layers made of a PET material.

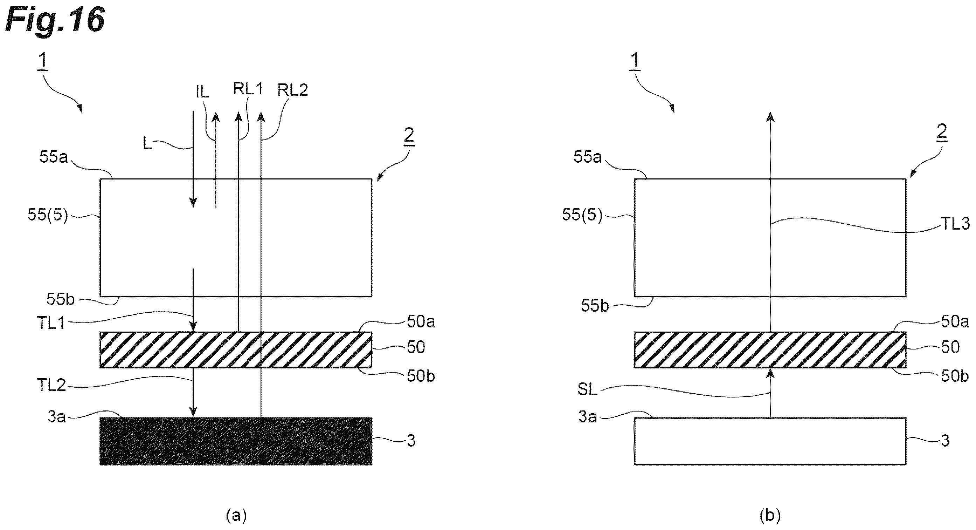

Light in a case where the light source 3 is turned off will be described with reference to FIG. 16(a). When the light source 3 is turned off, the light source 3 is not emitting light, and a surface 3a is black. As illustrated in FIG. 16(a), the incident light L is emitted to the outside from the pattern printed layer 5 as interference light IL. A part of the incident light L enters the reflective layer 50 from the main body portion 55 as transmitted light TL1. The reflective layer 50 receives the transmitted light TL1 from the main body portion 55 at a position on a front side of the light source 3. The reflective layer 50 reflects a part of the transmitted light TL1 as reflected light RL1. The reflected light RL1 is emitted to the outside through the main body portion 55. Another part of the transmitted light TL1 is transmitted through the reflective layer 50 and incident on the light source 3 as transmitted light TL2. The transmitted light TL2 is reflected from the black surface 3a of the light source 3 as reflected light RL2. The reflected light RL2 is emitted to the outside through the reflective layer 50 and the main body portion 55. Note that the reflected light RL1 attenuates when passing through the main body portion 55. The reflected light RL2 attenuates when passing through the reflective layer 50 and the main body portion 55. When the light source 3 is turned off, the interference light IL of the pattern printed layer 5, the reflected light RL1 of the reflective layer 50, and the reflected light RL2 of the black surface 3a of the light source 3 are visually recognized from the outside.

Light in a case where the light source 3 is turned on will be described with reference to FIG. 16(b). When the light source 3 is turned on, light SL indicating display content is generated on the surface 3a of the light source 3. The light SL is incident from the back surface 50b of the reflective layer 50, and a part thereof passes through the reflective layer 50 and is emitted from the front surface 50a as transmitted light TL3. The transmitted light TL3 is emitted to the outside through the main body portion 55. When the light source 3 is turned on, the transmitted light TL3 of the light source 3 is visually recognized.

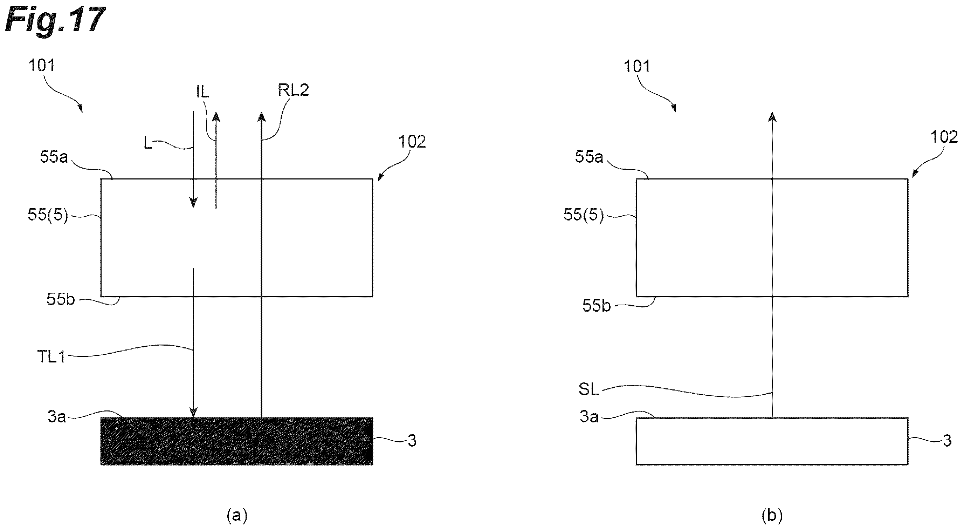

Here, for comparison with the printed object 2 and the display device 1 according to the present embodiment, a printed object 102 and a display device 101 in a comparative example will be described with reference to FIG. 17. The printed object 102 and the display device 101 in the comparative example do not include the reflective layer 50. Light in a case where the light source 3 is turned off will be described with reference to FIG. 17(a). When the light source 3 is turned off, the light source 3 is not emitting light, and a surface 3a is black. As illustrated in FIG. 17(a), the incident light L is emitted to the outside from the pattern printed layer 5 as the interference light IL as described above. A part of the incident light L enters the light source 3 from the main body portion 55 as the transmitted light TL1. The transmitted light TL1 is reflected from the black surface 3a of the light source 3 as reflected light RL2. The reflected light RL2 is emitted to the outside through the reflective layer 50 and the main body portion 55. Note that the reflected light RL2 attenuates when passing through the main body portion 55. When the light source 3 is turned off, the interference light IL of the pattern printed layer 5 and the reflected light RL2 of the black surface 3a of the light source 3 are visually recognized from the outside.

Light in a case where the light source 3 is turned on will be described with reference to FIG. 17(b). When the light source 3 is turned on, light SL indicating display content is generated on the surface 3a of the light source 3. The light SL is emitted to the outside through the main body portion 55. When the light source 3 is turned on, the light SL of the light source 3 is visually recognized.

In the display device 101 in the comparative example, as illustrated in FIG. 17(a), when the light source 3 is turned off, the interference light IL of the pattern printed layer 5 and the reflected light RL2 of the black surface 3a of the light source 3 are visually recognized from the outside. The visually recognized light thus includes the black reflected light RL2. When every region of the pattern of the pattern printed layer 5 is colored with a color other than white, an effect of the black reflected light RL2 on the appearance of the pattern from the outside is limited. When a region of a whitish color is included in the pattern of the pattern printed layer 5, on the other hand, the appearance of the pattern in the region from the outside is affected by the black reflected light RL2. Furthermore, when such a problem is addressed by reducing transmittance of the main body portion 55, there arises a problem that it is difficult to see an image when the light source 3 is turned on.

In the display device 1 according to the present embodiment, on the other hand, when the light source 3 is turned off, the interference light IL of the pattern printed layer 5, the reflected light RL1 of the reflective layer 50, and the reflected light RL2 of the black surface 3a of the light source 3 are visually recognized from the outside as illustrated in FIG. 16(a). Among the visually recognized beams of light, the black reflected light RL2 is the reflected light RL2 of the transmitted light TL2 attenuated by the reflective layer 50, and further attenuates since the black reflected light RL2 is further transmitted through the reflective layer 50 and emitted to the outside. Even if a whitish color region exists in the pattern of the pattern printed layer 5, therefore, the effect of the black reflected light RL2 on the appearance in the region can be suppressed.

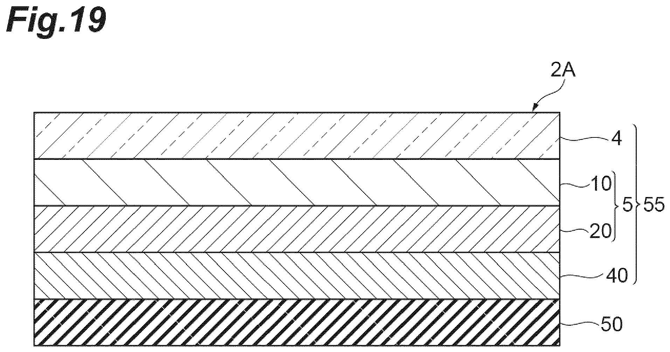

As described above, when a whitish color region exists in the pattern of the pattern printed layer 5, the effect becomes more remarkable. The whitish color refers to, for example, a color in a range of L↑* value of 50 or more in a L↑*a↑*b↑* color system. For the whitish color region, the same structure as that of a white pattern layer 40 described in Embodiment 5-2 in FIG. 19 described later may be employed. Note that colors of portions other than the whitish color region are not particularly limited. For example, the first interference pigments 14a and 14b may be red interference pigments (red pearl pigments) and gold interference pigments (gold pearl pigments), respectively, and the second interference pigments 24 may be green interference pigments (green pearl pigments).

In the comparative example, as illustrated in FIG. 17(a), the light SL from the light source 3 is emitted to the outside not through the reflective layer 50 but through the main body portion 55. In the display device 1 according to the embodiment, on the other hand, the light SL from the light source 3 is emitted to the outside as the transmitted light TL3 through not only the main body portion 55 but also the reflective layer 50 as illustrated in FIG. 16(a). In the display device 1 according to the present embodiment, therefore, if brightness of the light SL of the light source 3 remains the same, an image of the light source 3 visually recognizable from the outside when the light source 3 is turned on is darker than in the comparative example. It is preferable to set the total light transmittance of the printed object 2 and the total light transmittance of the reflective layer 50 within a predetermined range in order to make it possible to favorably visually recognize an image (especially white display or text) in this state.

The total light transmittance of the main body portion 55 may be set to, for example, 30% to 70%. The total light transmittance of the reflective layer 50 alone may be set to, for example, 30% to 70%. The total light transmittance of the entire printed object 2 in which the main body portion 55 and the reflective layer 50 are combined may be set to, for example, 30% to 70%. The total light transmittance referred to herein means a value obtained by measuring total light transmittance using a spectrophotometer (for example, spectrophotometer UV-2100 manufactured by Shimadzu Corporation).

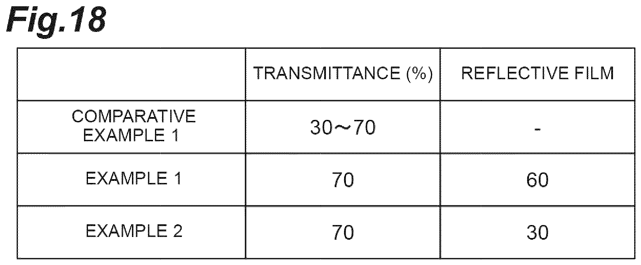

FIG. 18 is a table showing conditions of a printed object in a comparative example and printed objects in examples. The printed object in the comparative example is a printed object including only the main body portion 55 without the reflective layer 50 (the configuration illustrated in FIG. 17). As the total light transmittance of the main body portion 55 in the comparative example, one having a total light transmittance of 30% to 70% was prepared. The printed object in Example 1 includes a main body portion 55 having a total light transmittance of 70% and a reflective layer 50 having a total light transmittance of 60%. The total light transmittance of the entire printed object in Example 1 falls within the range of 30% to 70%. The printed object in Example 2 includes a main body portion 55 having a total light transmittance of 70% and a reflective layer 50 having a total light transmittance of 30%. The total light transmittance of the entire printed object in Example 2 is less than 30%. In each of the printed objects, a white pattern was used as the pattern of the pattern printed layer 5. In the printed object in the comparative example, at any percentage in the range of 30% to 70%, the effect of the black light source 3 was observed when the light source 3 was turned off, and the pattern appeared to be a color different from an original color. In each of the printed objects in Examples 1 and 2, on the other hand, the black color of the light source 3 was concealed even when the light source 3 was turned off, and the pattern appeared to be the same color as an original color and the effect of the black color could be suppressed. The light source 3 was turned on, and an image including text on a white screen was projected. At this time, the printed object in Example 1 had a white and natural appearance to the same extent as in the comparative example without the reflective layer 50. In the printed object in Example 2, on the other hand, the white color was slightly darker than in Example 1, and the text was slightly less visible.

In the display device 1 according to Embodiment 5-1 described above, when the light source 3 is turned off, the pattern of the pattern printed layer 5 of the printed object 2 can be visually recognized. In addition, when the light source 3 is turned on, content indicated by light of the light source 3 can be visually recognized. Here, when the light source 3 is turned off, the surface 3a of the light source 3 becomes black. The printed object 2, on the other hand, includes the reflective layer 50 that reflects light between the pattern printed layer 5 and the light source 3. The reflective layer 50, therefore, can reflect light from the outside before the light is incident on the black light source 3. It is therefore possible to reduce appearance of the black color on the surface of the light source 3. As described above, the effect of the color of the light source 3 that has been turned off on the visibility of the pattern of the pattern printed layer 5 can be reduced.

In the display device 1, the total light transmittance of the reflective layer 50 may be 30% to 70%. In this case, it is possible to suppress the light of the light source 3 that has been turned on from being difficult to visually recognize from the outside due to an excessively low total light transmittance of the reflective layer 50.

In the display device 1, the reflective layer 50 may be formed through vapor deposition of a metal. In this case, the appearance of the black color on the surface of the light source is further reduced, and pattern printing at a time when the light source is turned off can be expressed without a loss. In addition, an effect of forming the reflective layer with a thin film can be produced.

In the display device 1, the reflective layer 50 may include an optical member. In this case, the appearance of the black color on the surface of the light source is further reduced, and pattern printing at a time when the light source is turned off can be expressed without a loss. In addition, an effect of adjusting reflectance can be produced.

The printed object 2 is a printed object 2 disposed in such a way as to cover the light source 3 of the display device 1, and includes the light transmissive base material 4, the pattern printed layer 5, and the reflective layer 50 that is provided on one side with respect to the pattern printed layer 5 and that reflects light. With the printed object 2, when the printed object 2 is incorporated into the light source 3 of the display device 1, it is possible to produce the same functions and effect as those produced by the display device 1 described above.

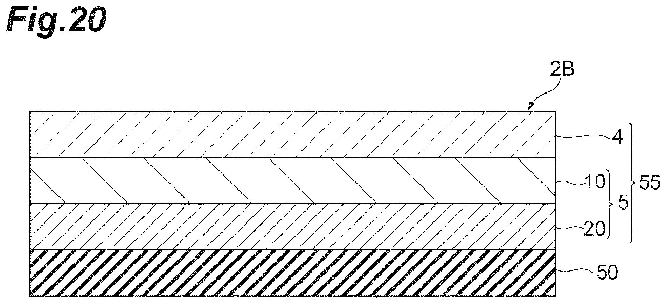

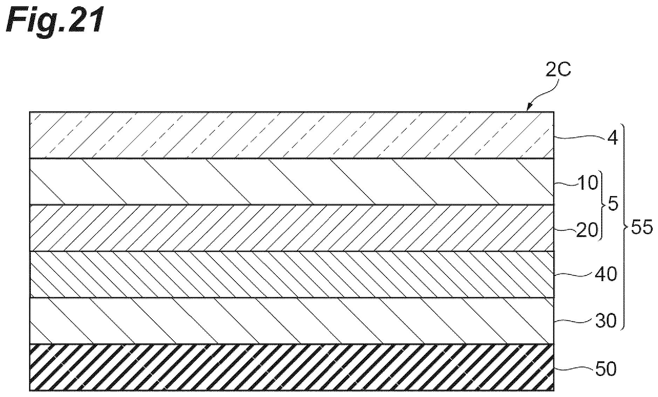

FIG. 19 is a cross-sectional view schematically illustrating a printed object according to Embodiment 5-2. FIG. 20 is a cross-sectional view schematically illustrating a printed object according to Embodiment 5-3. FIG. 21 is a cross-sectional view schematically illustrating a printed object according to Embodiment 5-4. In the printed object according to Embodiment 5-2, the main body portion 55 includes the light transmissive base material 4, the pattern printed layer 5, and the white pattern layer 40. The reflective layer 50 is provided for the main body portion 55. In the printed object according to Embodiment 5-3, the main body portion 55 includes the light transmissive base material 4 and the pattern printed layer 5. The reflective layer 50 is provided for the main body portion 55. Other points of the printed objects according to Embodiments 5-2 and 5-3 have the same configuration as the printed objects according to Embodiments 1-2 and 1-3. The printed object according to Embodiment 5-4 includes the light transmissive base material 4, the pattern printed layer 5, the white pattern layer 40, the transmissive smoke printed layer 30, and the reflective layer 50. The main body portion 55 includes the light transmissive base material 4, the pattern printed layer 5, the white pattern layer 40, and the transmissive smoke printed layer 30. The reflective layer 50 is provided for the main body portion 55. Other points of the printed object according to Embodiment 5-4 have the same configuration as the printed object according to Embodiment 1-4.

A stacking position of the reflective layer 50 in the printed object 2 is not particularly limited, and it is sufficient that the reflective layer 50 be disposed at least on a light source 3 side from the pattern printed layer 5. For example, the reflective layer 50 may be provided between the pattern printed layer 5 and the transmissive smoke printed layer 30.

The configuration of the pattern printed layer 5 is not limited to the structure illustrated in FIG. 2. The pattern printed layer 5 may have only one color pattern layer. Alternatively, for example, a pattern printed layer having a structure like a pattern based on printing specifications such as gravure printing, offset printing, inkjet printing, screen printing, and the like may be employed.

As described above, the printed object 2 may further include the reflective layer 50. As a result, the appearance of the black color on the surface of the light source can be reduced, and the effect of the color of the light source that has been turned off on the visibility of the pattern of the printed object 2 can be reduced.

The total light transmittance of the reflective layer 50 may be 30% or more and 70% or less. In this case, it is possible to suppress the light of the light source that has been turned on from being difficult to visually recognize from the outside due to an excessively low total light transmittance of the reflective layer 50.

The reflective layer 50 may be a vapor deposited metal layer. In this case, the appearance of the black color on the surface of the light source is further reduced, and pattern printing at a time when the light source is turned off can be expressed without a loss. In addition, the reflective layer 50 can be formed with a thin film.

### [Sixth Disclosure]

Conventionally, there has been proposed a decorative film in which a light transmissive decorative film is disposed in front of a display to conceal the display (see, for example, Japanese Unexamined Patent Publication No. 2022-167552). By providing a concealing layer of the light transmissive decorative film with a concealing property and a light transmissive property, the display can be concealed and an image on the display can be projected onto the decorative panel.

When the display and a periphery thereof are concealed by the light transmissive decorative film described in Japanese Unexamined Patent Publication No. 2022-167552, the light transmissive decorative film is attached to a transparent plate and used in a panel shape. When the light transmissive decorative film is attached to the transparent plate, however, there is a problem that a color tone of a pattern of the light transmissive decorative sheet becomes lighter and contrast of an image on the display viewed through the decorative sheet deteriorates.

The present disclosure is intended to solve the above-described problem, and an object thereof is to provide a decorative panel, a display device, and a display method capable of inhibiting a color tone of a light transmissive film from becoming lighter and suppressing deterioration of contrast of an image on a display behind the light transmissive film.

The inventors of the present application have found that a cause of a color tone of a pattern becoming lighter and the deterioration of contrast of an image on the display viewed through the decorative sheet when a light transmissive decorative sheet is attached to a transparent panel, is light transmitted from a front surface of the light transmissive decorative sheet being reflected at a boundary between the transparent panel provided on a back surface and an air layer to illuminate the light transmissive decorative sheet from the back surface.
[1] The present disclosure provides, as a decorative panel according to one aspect, a colored transparent panel including a light transmissive decorative film and a smoke panel bonded to the light transmissive decorative film. The smoke panel has a total light transmittance of 3% or more and 40% or less.
   In this decorative panel, the smoke panel that is a colored transparent panel having a total light transmittance of 3% or more and 40% or less is bonded to the light transmissive decorative film. It is therefore possible to suppress a phenomenon in which light transmitted from a front surface of the light transmissive decorative film is reflected from a back surface of the decorative panel. It is therefore possible to suppress a change in color tone (a phenomenon in which a color tone becomes lighter) of the light transmissive decorative film and deterioration of contrast of an image displayed on a display on the back surface, due to the light transmissive decorative film being illuminated from a back surface. In addition, even a light transmissive decorative film having a low concealing property can improve a base concealing property when combined with the smoke panel. As a result, an effect of a difference in color of a transparent base is reduced, and a change in the color tone of the light transmissive decorative film can be suppressed. As described above, it is possible to inhibit the color tone of the light transmissive decorative film from becoming lighter and to suppress deterioration of the contrast of the image on the display on the back side. In addition, when the concealing layer of the decorative sheet is made to have a certain degree of light transmittance as a decorative sheet having the light transmittance and the concealing property, the base concealing property is secured even if a concealing ratio of the concealing layer is lowered, so that it is possible to suppress deterioration in the visibility of an image on the display on the back surface caused by the concealing layer.
[2] In the decorative panel according to [1], the smoke panel may control the color tone of the light transmissive decorative film in accordance with the color of the smoke panel. In this case, the color of smoke panel can be used to control the light transmissive decorative film in such a way as to achieve a desired color tone.
[3] In the decorative panel according to [1] or [2], the light transmissive decorative film may include a concealing layer. The color tone and the base concealing property of the light transmissive decorative film can thus be controlled using the concealing layer and the smoke panel.
[4] In the decorative panel according to [1] or [2], the smoke panel may be a concealing layer. In this case, the concealing layer of the light transmissive decorative film can be omitted.
[5] The present disclosure relates, in another aspect, to a display device. The display device is configured by concealing the display with the decorative panel according to any one of [1] to [4]. In this case, it is possible to suppress deterioration of the contrast of an image displayed on the display constituting the display device.
[6] The present disclosure relates, in another aspect, to a display method. In this display method, the display is covered with the decorative panel according to any one of [1] to [4], and bias and gain of RGB of the display are adjusted in accordance with the color tone of the smoke panel, so that white display appears white through the smoke panel. In this case, the color tone of the image on the display visible from the front of the decorative panel can be adjusted.
[7] The display device is adjusted by the display method according to [6]. In this case, the color tone of the image on the display device visible from the front of the decorative panel can be adjusted.

According to the present disclosure, it is possible to provide a decorative panel, a display device, and a display method capable of inhibiting a color tone of a light transmissive film from becoming lighter and suppressing deterioration of contrast of an image on a display behind the light transmissive film. In addition, by using a smoke material as the concealing layer or a part thereof, the concealing property of the concealing layer of the sheet can be lowered, and diffuse reflection of transmitted light in the concealing layer can be reduced.

Specific examples of a decorative panel and a display device according to an embodiment of the present disclosure will be described hereinafter with reference to the drawings. Note that the present disclosure is not limited to these examples but is indicated by the claims, and is intended to include all modifications within a meaning and a scope equivalent to the claims. In the following description, the same elements will be given the same reference numerals in the description of the drawings, and redundant description thereof is omitted.

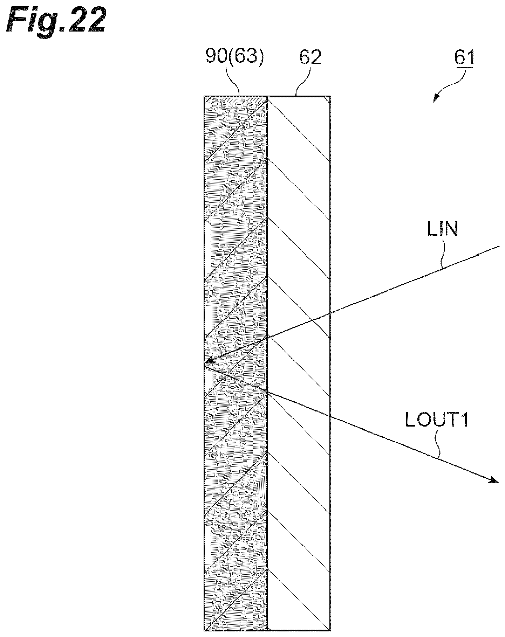

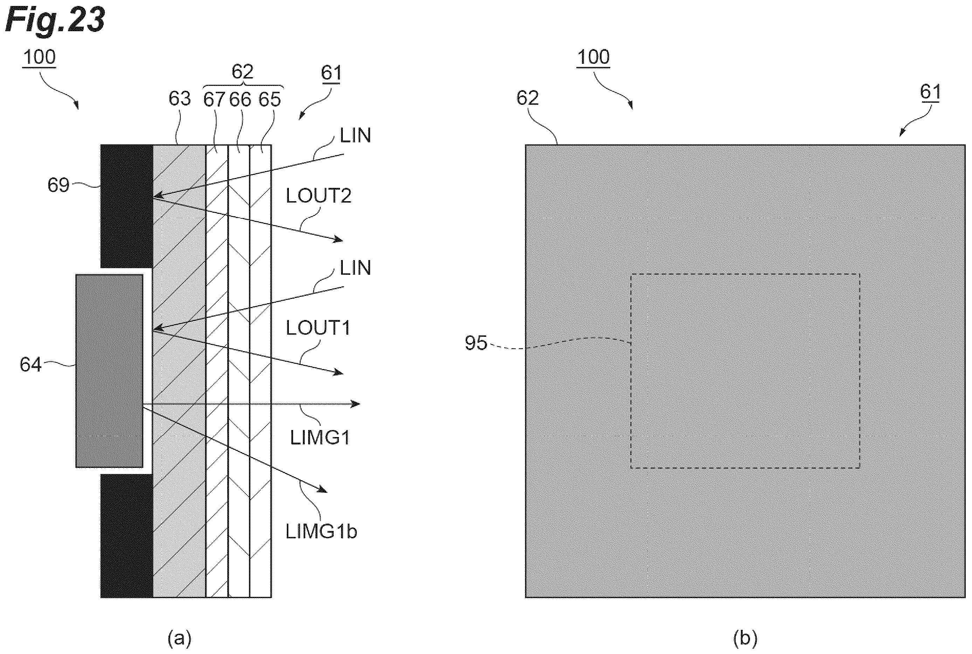

FIG. 22 is a cross-sectional view schematically illustrating a decorative panel 61 according to the embodiment of the present disclosure. FIG. 23 is a cross-sectional view schematically illustrating a display device 100 according to the present embodiment. As illustrated in FIG. 22, the decorative panel 61 (printed object) includes a light transmissive decorative film 62 and a smoke panel 63. The display device 100 includes a decorative panel 61 and a display 64.

The decorative panel 61 is provided in front of the display 64 as a light source (between the viewer and the display 64). The display device 100 is configured by concealing the display 64 with the decorative panel 61. The decorative panel 61 has total light transmittance. When the display 64 is turned on, therefore, the viewer can visually recognize light transmitted from the display 64 through the decorative panel 61, and when the display 64 is turned off, the viewer can visually recognize a pattern expressed by the decorative panel 61.

The light transmissive decorative film 62 is a film for expressing a pattern. Total light transmittance of the light transmissive decorative film 62 is preferably 10% or more and 70% or less. Note that, when a concealing layer 67 is not provided on the light transmissive decorative film 62, the total light transmittance may be 70% or more. The light transmissive decorative film 62 having a total light transmittance of 10% or more allows light from the display (see FIG. 23) to easily pass therethrough. Note that the total light transmittance herein means, for example, a value obtained by measuring total light transmittance using a spectrophotometer (for example, spectrophotometer UV-2100 manufactured by Shimadzu Corporation).

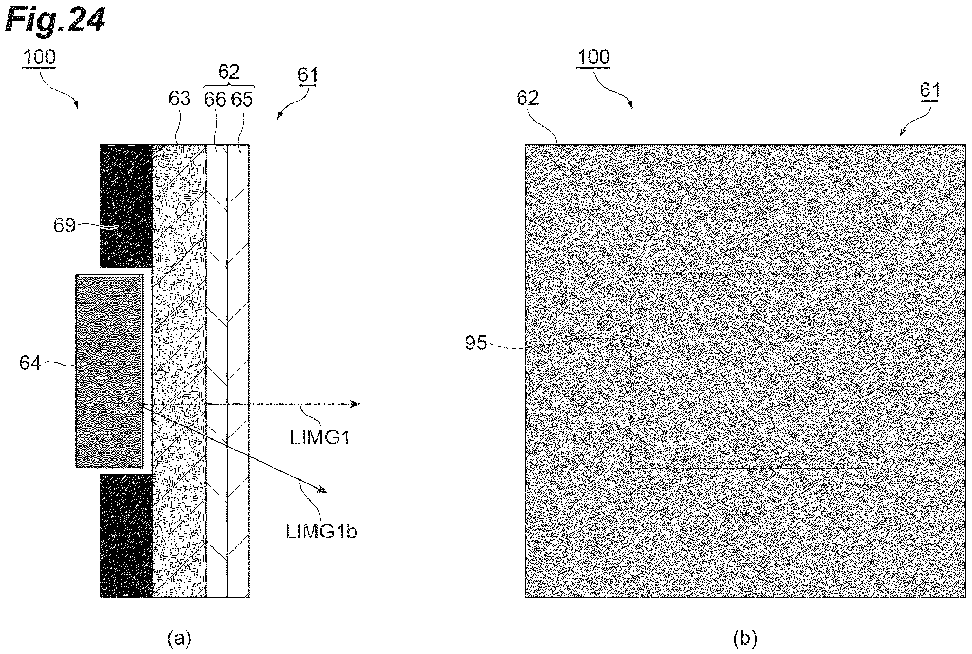

As illustrated in FIG. 23, the light transmissive decorative film 62 may include a print substrate 65 (light transmissive base material), a pattern layer (pattern printed layer) 66, and a concealing layer 67. Structure of the light transmissive decorative film 62, however, is not particularly limited as long as it is a decorative film having light transmittance. For example, as in the light transmissive decorative film 62 of the display device 100 illustrated in FIG. 24, the concealing layer 67 itself of the light transmissive decorative film 62 may be eliminated by using the smoke panel 63 as a concealing layer. Note that the concealing layer 67 may not be a layer formed through printing, but may be a color film with holes.

The print substrate 65 is a substrate having visible light transmittance. The print substrate 65 is made of, for example, a resin having transparency. Examples of the resin having transparency include PET, PMMA, polycarbonate, polyethylene, polypropylene, and nylon. The print substrate 65 may be a glass substrate. Thickness of the print substrate 65 is, for example, 25 µm to 250 µm, but a substrate having a thickness outside this range can also be used as long as printing is possible. In the case of a glass substrate, the thickness is, for example, several mm to about 10 mm. Note that, if necessary, a surface protective layer, an anti-fingerprint layer, an antireflection layer, or the like may be provided on a front surface side of the print substrate 65 (a side opposite the pattern layer 66).

The pattern layer 66 is a layer on which a pattern expressed by the light transmissive decorative film 62 is formed. The pattern of the pattern layer 66 is a pattern that appears on a surface of the decorative sheet when the display 64 is turned off, and, for example, a woodgrain pattern, an abstract pattern, or the like may be employed. The pattern layer 66 may be formed by performing printing on the print substrate 65. Printing may be performed by any printing method such as gravure printing, inkjet printing, screen printing, or offset printing. A material of a decorative ink used for the printing may be an inorganic pigment, an organic pigment, or an interference pigment, and any material may be used. Thickness of the pattern layer 66 is, for example, 1 µm to 100 µm.

The concealing layer 67 is a layer that conceals the display 64 when the display 64 is turned off, and determines a color tone of the pattern. When the pattern layer 66 is printed using an interference pigment, black or gray is used for the concealing layer 67 in order to improve color vibrancy, but when an inorganic pigment, an organic pigment, or the like is used, it is difficult to see the pattern if black or gray is used. In this case, white is preferably used for the concealing layer 67. When the pattern is woodgrain, the concealing layer 67 can change the color tone with a brown color. Since the concealing layer 67 conceals the display 64 together with the smoke panel 63, which will be described later, the concealing property of the concealing layer 67 may be suppressed low. The concealing layer 67 may be formed by, for example, printing a solid layer on the pattern layer 66. As the concealing layer 67, for example, a white solid layer may be printed. The white solid layer has an effect of controlling the color tone of the pattern and preventing the pattern from sinking in a black base and becoming difficult to see. A base concealing property may be lowered by reducing printing density of white solid printing and performing printing thinly. As the concealing layer 67, for example, a black solid layer may be printed. The black solid layer has an effect of making colors of interference pigments more visible and concealing the base. The base concealing property may be lowered by reducing the printing density and performing printing thinly. Printing may be performed by any printing method such as gravure printing, inkjet printing, screen printing, or offset printing. Note that a concealing layer may be partially further formed on the concealing layer 67 to provide a transmissive portion and a non-transmissive portion. The printing density at a boundary between the non-transmissive portion and the transmissive portion may be gradually changed so that no clear difference is caused. The concealing layer 67 may be a layer formed by printing, a colored film, or a colored sheet. Note that, similarly, a concealing layer may be partially further formed on the smoke panel 63.

Note that by replacing the concealing layer and a color original fabric with the smoke panel 63, the concealing layer and the color solid layer for controlling the color tone may be eliminated from the configuration of the light transmissive decorative film 62. The concealing layer 67 may be configured by laminating the colored film instead of being provided through printing. The smaller the film thickness of the colored film, the higher the light transmittance. A top coat layer may be provided on the surface of the light transmissive decorative film 62. A surface of the print substrate 65 may be embossed. The printing may be either frontside printing or back-side printing.

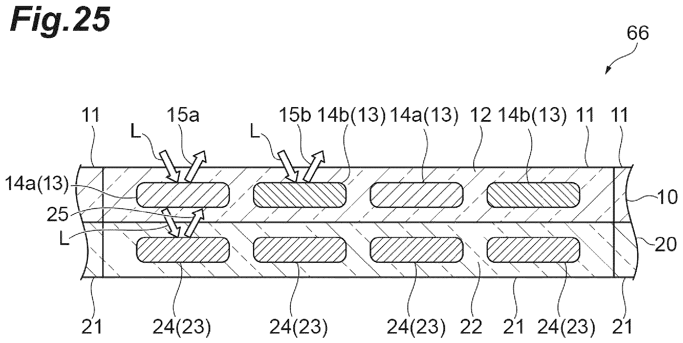

Here, an example of a specific structure of the pattern layer 66 will be described with reference to FIG. 25. The pattern layer 66 illustrated in FIG. 25 includes the first color pattern layer 10 provided on one surface 4a of the print substrate 65 and the second color pattern layer 20 provided on the first color pattern layer 10. The pattern layer 66 illustrated in FIG. 25 has the same configuration as the pattern printed layer 5 illustrated in FIG. 2.

As illustrated in FIG. 22, the smoke panel 63 has a function of attenuating light passing through the light transmissive decorative film 62 from the front side of the viewpoint. The smoke panel 63 is disposed on the back surface of the light transmissive decorative film 62. In the display device 100, the smoke panel 63 is disposed on a front surface side of the display 64. The smoke panel 63 is a colored transparent panel having a predetermined total light transmittance. The total light transmittance of the smoke panel 63 may be 3% or more, or may be 18% or more. In addition, the total light transmittance of the smoke panel 63 may be 40% or less, or may be 28% or less. The lower the total light transmittance, the more the back surface reflected light can be reduced. When the display 64 disposed on the back surface has a high luminance, the total light transmittance of the smoke panel 63 may be lowered.

The smoke panel 63 may be a smoke plate 90 in which a plate-shaped member itself is a smoke member (see FIG. 22). As a material of the smoke plate 90, for example, a transparent resin such as acrylic, polycarbonate, or vinyl chloride, or another glass may be employed. Thickness of the smoke plate 90 is not particularly limited, but may be, for example, 1 mm or more and 5 mm or less.

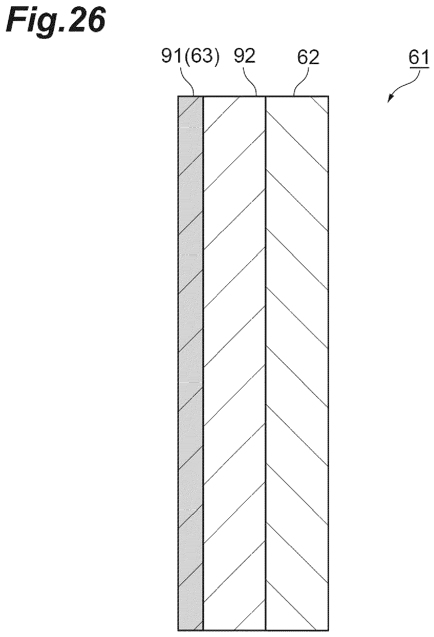

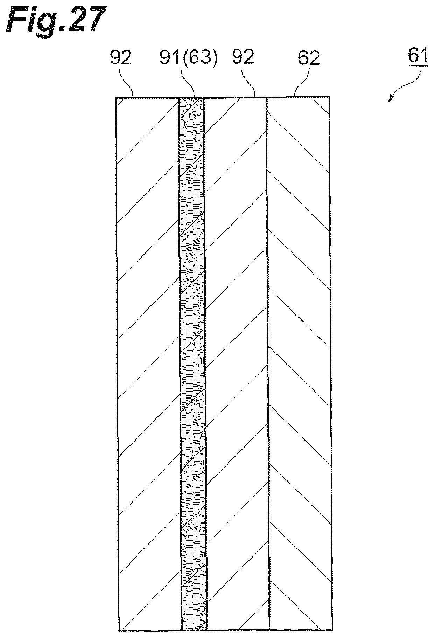

Alternatively, the smoke panel 63 may be a smoke film 91 that can be attached to a transparent plate (see FIGS. 26 and 27). As a material of the smoke film 91, for example, PET, PMMA, polypropylene, or the like may be employed. In the example illustrated in FIG. 26, the smoke film 91 is attached to a back surface of a transparent plate 92. In the example illustrated in FIG. 27, another transparent plate 92 is disposed on a back surface side of the smoke film 91 on the back surface of the transparent plate 92. In addition, laminated glass with the smoke film 91 interposed therein may be used, and in this case, reflected light is larger than when the smoke film 91 having the same total light transmittance is attached to the back surface. If the total light transmittance remains the same, reflected light can be reduced by using a smoke plate 90 made of smoke acrylic or the like rather than employing one in which a smoke film 91 is attached to a back surface of a transparent plate 92.

The smoke panel 63 is colored. The color of the smoke panel 63 is not particularly limited, and any color may be employed, but for example, a color such as gray, brown, or blue may be employed. A method for coloring the smoke panel 63 is not particularly limited. For example, the smoke panel 63, which is a colored transparent panel, may be fabricated by including a substance that imparts color, such as a pigment or a dye, in the material of the transparent panel and molding the material into a plate shape. When the smoke film is substituted with a thin colored layer provided through printing, a printing method such as screen printing, inkjet printing, gravure printing, or offset printing may be employed. Note that the color of the smoke panel 63 is not limited because various colors can be employed, and a desired wall color may be used.

The smoke panel 63 may control the color tone of the light transmissive decorative film 62 in accordance with the color of the smoke panel 63. For example, while the display 64 is turned off, the pattern of the pattern layer 66 of the light transmissive decorative film 62 is visually recognized from the front side of the display device 100. At this time, the color tone of the pattern of the pattern layer 66 is controlled by the color of the smoke panel 63. When the color of the smoke panel 63 is brown and the pattern of the pattern layer 66 is woodgrain, for example, brownish woodgrain can be visually recognized from the front side of the display device 100.

The lower the total light transmittance of the smoke panel 63, the greater the effect of reducing the reflected light, but it is preferable to optimize the total light transmittance of the smoke panel 63 in consideration of the luminance of the display 64 and the like. A part of the smoke plate 90 may be shaved to reduce the thickness, but the total light transmittance of the part might change. If the color tone is changed by this, it is preferable to adjust the color tone using a black sheet or painting. The display 64 may be installed and embedded in an opening of a surrounding wall 69 (see FIGS. 23 and 24). In addition, the display 64 may be installed on a back surface of the wall in such a way as to close an opening in the wall 69. When there is a gap between the wall 69 and the display 64, it is preferable to sufficiently darken the back surface of the wall 69 so that light does not leak. When the smoke panel 63 affects the color tone of the image on the display 64, it is preferable to adjust the color tone by adjusting gain or bias of RGB of the display 64. White display may appear white through the smoke panel 63 by adjusting the bias and gain of the RGB of the display 64 constituting the display device 100 in accordance with the color tone of the smoke panel 63.

A method for bonding the light transmissive decorative film 62 and the smoke panel 63 to each other is not particularly limited, and transparent double-sided tape, OCA, tape, thermal fusion, or the like may be employed. In the case of thermal fusion, a film may be laminated on the printed layer. The color of the wall 69 around the display 64 may be any color as long as the color tone of the light transmissive film 62 is not affected, but if the color of the base is affected, it is preferable to set the color to a color similar to a color of the display that is not displaying an image. When a concealing layer is further partially added to the back of the concealing layer 67 of the light transmissive decorative film 62, printing may be performed with density of the same concealing ink increased, but the concealing layer may be formed by attaching a black or gray film or sheet.

Next, functions and effects of the decorative panel 61, the display device 100, and the display method according to the present embodiment will be described.

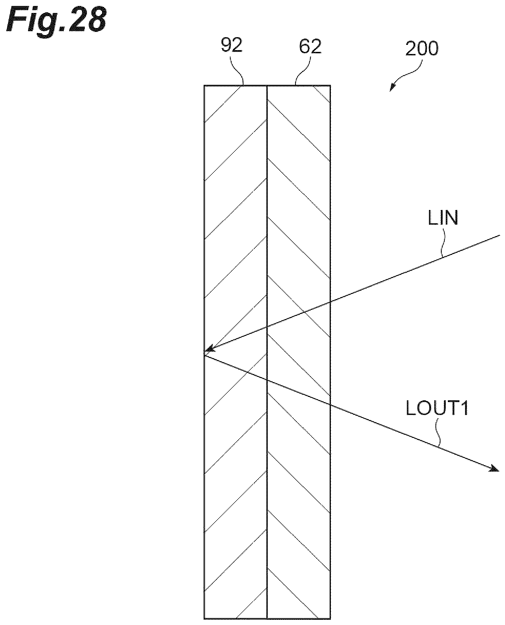

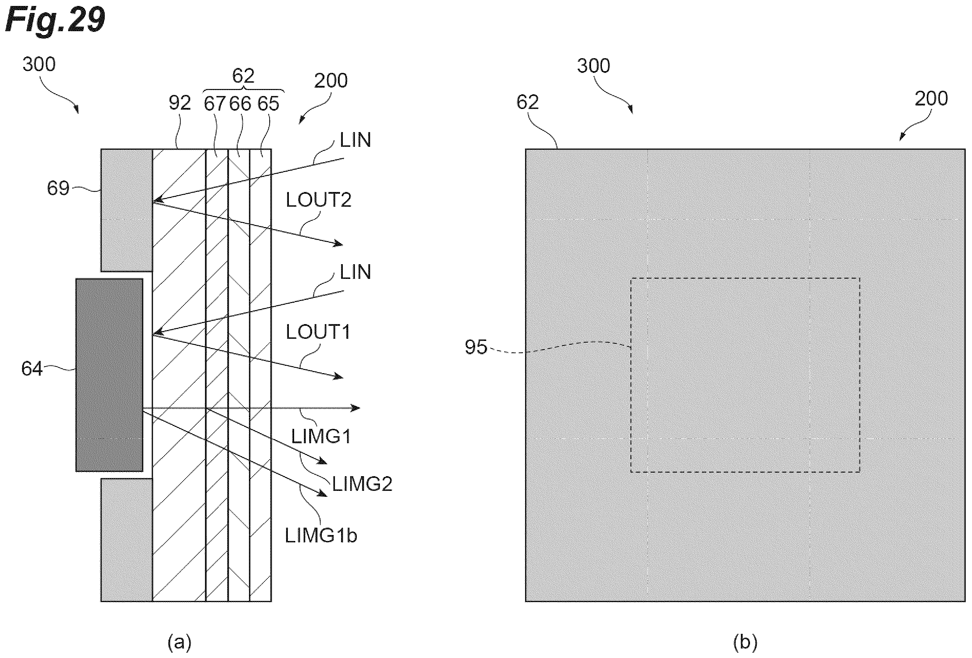

First, a decorative panel 200 and a display device 300 in a comparative example will be described with reference to FIGS. 28 and 29. As illustrated in FIG. 28, the decorative panel 200 in the comparative example includes a light transmissive decorative film 62 and a transparent plate 92, and does not include a smoke panel 63. As illustrated in FIG. 29, in the display device 300 in the comparative example, the display 64 is covered with the decorative panel 200.

In the decorative panel 200, when a back surface of the transparent plate 92 is an air layer as illustrated in FIGS. 28 and 29, incident light LIN incident from a front surface of the light transmissive decorative film 62 is reflected from the back surface of the transparent plate 92. As a result, reflected light LOUT1 at an air layer interface illuminates the light transmissive decorative film 62 from the back surface, and the color tone of the light transmissive decorative film 62 becomes lighter. In addition, there is a problem that, if an image LIMG1 on the display 64 is transmitted through the decorative panel 200 when the display 64 is turned on, contrast of the image LIMG1 deteriorates. Furthermore, in the light transmissive decorative film 62 having a high base concealing property, an image LIMG on the display 64 is projected onto a concealing layer 67 (projected image LIMG2). When viewed obliquely, therefore, there is a problem that an image looks double due to an effect of the obliquely directed image LIMG1b and the projected image LIMG2, and visibility deteriorates due to blurring or the like. When the concealing property of the light transmissive decorative film 62 is lowered, on the other hand, there is a problem that the base is seen through.

In the decorative panel 61 according to the present embodiment, on the other hand, a colored transparent smoke panel 63 having a total light transmittance of 3% or more and 40% or less is attached to the light transmissive decorative film 62. The reflected light LOUT1 generated when the incident light LIN incident from the front surface of the light transmissive decorative film 62 is reflected by the back surface of the decorative panel 61, therefore, is reduced. It is therefore possible to inhibit the color tone of the light transmissive decorative film 62 from becoming lighter and the contrast of the image LIMG1 on the display 64 on the back surface from deteriorating due to the light transmissive decorative film 62 being illuminated from the back surface. In addition, even in the case of the light transmissive decorative film 62 having a low concealing property, the base concealing property is improved by combining with the smoke panel 63, and it is possible to suppress a change in the color tone of the light transmissive decorative film 62 by reducing an effect of a difference in the color of the base that is seen through. As described above, it is possible to inhibit the color tone of the light transmissive decorative film 62 from becoming lighter and to suppress deterioration of the contrast of the image LIMG1 on the display 64 on the back side.

In the decorative panel 61, the smoke panel 63 may control the color tone of the light transmissive decorative film 62 in accordance with the color of the smoke panel 63. In this case, the color of smoke panel 63 can be used to control the light transmissive decorative film 62 in such a way as to achieve a desired color tone.

In the decorative panel 61, the light transmissive decorative film 62 may include the concealing layer 67. The color tone of the light transmissive decorative film 62 can thus be controlled using the concealing layer 67 and the smoke panel 63.

In the decorative panel 61, the smoke panel 63 may be the concealing layer. In this case, the concealing layer 67 of the light transmissive decorative film 62 can be omitted.

The display device 100 is configured by concealing the display 64 with the decorative panel 61 described above. In this case, it is possible to suppress deterioration of the contrast of an image on the display 64 constituting the display device 100.

As a display method, the bias and gain of the RGB of the display 64 covered with the decorative panel 61 described above are adjusted in accordance with the color tone of the smoke panel 63 to make the white display appear white through the smoke panel 63. In this case, the color tone of the image on the display 64 visible from the front of the decorative panel 61 can be adjusted.

The display device 100 is adjusted by the above-described display method. In this case, the color tone of the image on the display 64 visible from the front of the decorative panel 61 can be adjusted. For example, in the case of brown smoke, it is possible to make white that has appeared reddish whiter by lowering values of the gain and bias of R in settings of the display.

As described above, the decorative panel 200 in the comparative example has a problem that an image is blurred when viewed obliquely. When diffuse reflection of light from the display 64 occurring in the concealing layer 67 is large, an image is formed in the concealing layer 67. In particular, when the concealing layer 67 is white, light is easily diffusely reflected. When interference pigments are used, a blackish layer might be formed as the concealing layer 67 in order to improve color vibrancy. In this case, diffuse reflection is less likely to occur as compared with a white concealing layer. Since the image on the display 64 is not projected onto the concealing layer 67 in the decorative panel 200 in which the concealing property of the concealing layer 67 is low and the base is seen through, an image is not seen double due to light derived from the display 64 and the concealing layer 67, and the display is not seen blurred through the decorative panel 200 even when viewed obliquely. Since the concealing property is low, however, the display 64 and a periphery thereof are seen through the decorative panel 200, and the base cannot be concealed. In the decorative panel 61 according to the present embodiment, on the other hand, by combining the light transmissive decorative film 62 that has a low concealing property and that transmits an image from the display 64 without projecting the image onto the concealing layer and the smoke panel 63, the image is not seen double on the display 64 and the light transmissive decorative film 62, and the image is not blurred when viewed obliquely. Furthermore, by concealing the base, the reflected light LOUT1 reflected from the back side of the decorative panel 61 can be inhibited from illuminating the light transmissive decorative film 62 from the back side.

### [Comparative Example 1]

A specific Comparison Example 1 will be described with reference to FIG. 29. In Comparative Example 1, a 75 µm PET resin was used as a print substrate 65. A pattern layer 66 having a woodgrain pattern was printed on the print substrate 65, and a white solid layer was printed thereon to form a concealing layer 67. The white solid layer controlled a color tone of a pattern and concealed a base to obtain a light transmissive decorative film 62 printed at a thickness at which total light transmittance of the light transmissive decorative film 62 was 17%. A transparent acrylic plate having a total light transmittance of 90% or more was bonded to a back side of the light transmissive decorative film 62 as a transparent plate 92 to fabricate a decorative panel 200. The decorative panel 200 was attached to a wall 69 colored in gray around the display 64 to conceal the display 64 installed on the wall 69 and the wall 69 colored in gray around the display 64. Because even the light transmissive decorative film 62 having a high base concealing property has light transmissivity, when the transparent plate 92 is used as the base, the incident light LIN incident through the sheet is reflected at the interface between the transparent plate 92 and the air layer to illuminate the light transmissive decorative film 62 from the back surface. The color tone, therefore, becomes whitish, and the pattern becomes lighter. When the gray wall 69 whose color has been adjusted is bonded to the back side of the transparent plate 92, the reflected light LOUT2 becomes bright and similar to the reflected light LOUT1 reflected at the interface with the air layer on the back side of the transparent plate 92, and a difference in color tone can be eliminated. The color tone of the light transmissive decorative film 62 becomes whitish as a whole due to the beams of reflected light LOUT1 and LOUT2, and the contrast of the image on the display through the light transmissive decorative film 62 decreases. In Comparative Example 1, unlike in Comparative Example 2 described later, there is no difference in color tone between an image display portion 95 and a surrounding portion, but the color tone becomes lighter as a whole (see FIG. 29(b)). In addition, since the concealing property of the light transmissive decorative film 62 is high, the image LIMG1 on the display 64 is projected onto the concealing layer 67. When viewed obliquely, therefore, the image LIMG1b from the display and the projected image LIMG2 projected onto the concealing layer 67 appear double, and the image is blurred.

### [Comparative Example 2]

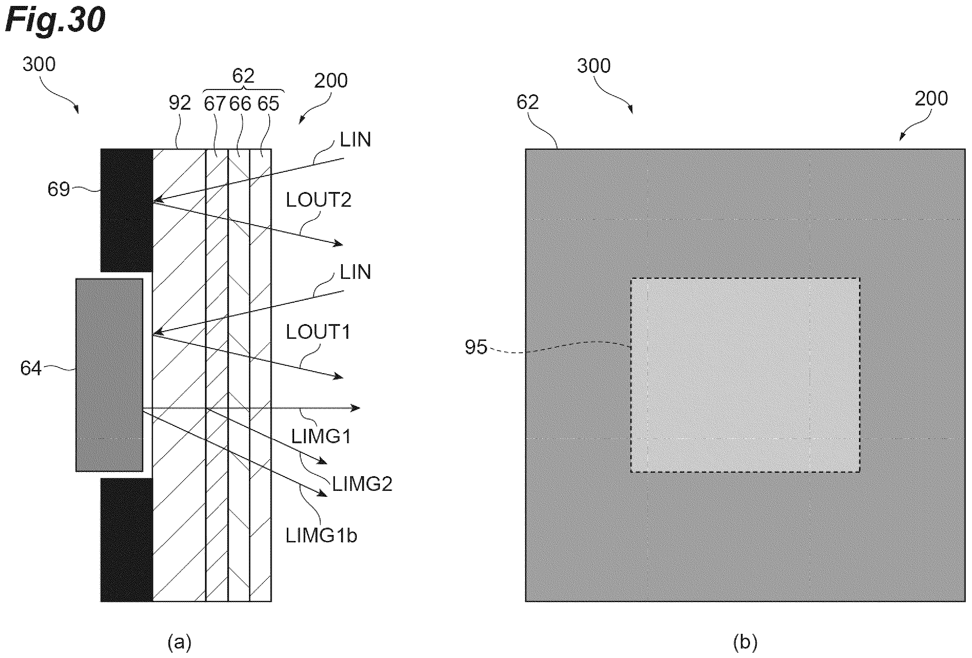

A specific Comparison Example 2 will be described with reference to FIG. 30. Comparative Example 2 is similar to Comparative Example 1 except that the display 64 installed on the wall 69 and the black wall 69 around the display 64 are concealed. When the black wall 69 is bonded to the back side of the transparent plate 92, the reflected light LOUT2 becomes darker, so that there is a difference in brightness from the reflected light LOUT1 reflected at the interface with the air layer on the back side of the transparent plate 92. There is therefore a difference in color tone between the light transmissive decorative film 62 to which the black wall 69 is bonded and the light transmissive decorative film 62 at a position facing the display 64. As a result, the image display portion 95 rises in a light color tone (see FIG. 30(b)). Since the color tone of the image display portion 95 looks different, presence of the display 64 cannot be concealed as a result. Other problems are the same as those of Comparative Example 1.

### [Example 2-1]

A specific Example 2-1 will be described with reference to FIG. 23. In Example 2-1, a 75 µm PET film was used as the print substrate 65, a pattern layer 66 having a woodgrain pattern was back-printed thereon using an inorganic pigment, and a white solid layer was printed thereon to form the concealing layer 67. The white solid layer has an effect of controlling the color tone of the pattern and preventing the pattern from sinking in a black base and becoming difficult to see. By reducing the printing density of white solid printing and performing printing thinly, the base concealing property was lowered to obtain a light transmissive decorative film 62 having a total light transmittance of 25%. A smoke acrylic plate having a total light transmittance of 28% was attached to a back side of the light transmissive decorative film 62 as a brown smoke panel 63 to produce a decorative panel 61. The decorative panel 61 was attached to the black wall 69 around the display 64 installed on the wall 69 to conceal the display 64 installed on the wall 69 and the black wall 69 around the display 64. A liquid crystal monitor having a luminance of 700 cd was used as the display 64. By combining with brown smoke acrylic, the base concealing property was enhanced, and the display 64 and the surrounding wall 69 could be concealed even with the light transmissive decorative film 62 having a low base concealing property. In addition, by using the brown smoke acrylic plate, even if the printing density of the white solid of the concealing layer 67 was lowered, the color tone of the picture could be prevented from becoming darker. Since reflection of the incident light LIN was small, the smoke acrylic plate could prevent the light transmissive decorative film 62 from being illuminated from the back surface, and the color tone did not become lighter. For this reason, a difference in color tone was not observed between a portion bonded to the black wall 69 and an image display portion 95 of a portion facing the display 64. In addition, when brown smoke was used as the smoke panel 63, the color tone did not become darker than when gray smoke was used. Since the surface of the light transmissive decorative film 62 did not become whitish, the image on the display 64 could be visually recognized with high contrast through the sheet. In addition, since the concealing property of the light transmissive decorative film 62 was low, the image on the display 64 was not projected onto the concealing layer 67, and even when viewed obliquely, the image LIMG1b from the display 64 and the image projected onto the concealing layer 67 were not seen double, and the image was not blurred. The reflected light LOUT2, which was the incident light LIN reflected from the black wall 69, and the reflected light LOUT1, which was reflected by the interface between the air layer of the smoke panel 63, were substantially equal to each other, and a difference in color tone was not observed between the reflected light LOUT2 and the reflected light LOUT1, and as a result, the image display portion 95 did not look bright.

### [Example 2-2]

A specific Example 2-2 will be described with reference to FIG. 23. In Example 2-2, a 75 µm PET resin was used as the print substrate 65, a pattern layer 66 having a woodgrain pattern was back-printed thereon using interference pigments, and a black solid layer was printed thereon to form a concealing layer 67. The black solid layer has an effect of making colors of interference pigments more visible and concealing the base. By reducing the printing density and performing printing thinly, the base concealing property was lowered to obtain a light transmissive decorative film 62 having a total light transmittance of 60%. A gray smoke acrylic plate having a total light transmittance of 18% and a thickness of 3 mm was attached as a smoke panel 63 to a back side of the light transmissive decorative film 62 to fabricate a decorative panel 61. The decorative panel 61 was bonded to the black wall 69 around the display 64 installed on the wall 69 to conceal the display 64 installed on the wall 69 and the black wall 69 around the display 64. By combining the smoke acrylic plate and the light transmissive decorative film 62, the base concealing property was enhanced, and even the light transmissive decorative film 62 having a low base concealing property could conceal the display 64 and the surrounding wall 69. Since reflection of the incident light LIN was small, the smoke acrylic plate could prevent the light transmissive decorative film 62 from being illuminated from the back surface. The color tone, therefore, did not become lighter, and a difference in color tone was not observed between a portion bonded to the black wall 69 and an image display portion 95 of a portion facing the display 64. Furthermore, it was possible to inhibit the color tone from becoming lighter as in Comparative Example 1. In addition, the color vibrancy of the interference pigments was improved by using gray smoke as the smoke acrylic. In addition, since the concealing property of the concealing layer 67 of the light transmissive decorative film 62 was low and the color was black, the image LIMG1 on the display 64 was not projected onto the concealing layer 67, and even when viewed obliquely, the image LIMG1b from the display 64 and the image projected onto the concealing layer 67 were not seen double and the image was not blurred. The reflected light LOUT2, which was the incident light LIN reflected from the black wall 69, and the reflected light LOUT1, which was reflected by the interface between the air layer of the smoke panel 63, were substantially equal to each other, and a difference in color tone was not observed between the reflected light LOUT2 and the reflected light LOUT1, and as a result, the image display portion 95 did not look bright.

### [Example 2-3]

A specific Example 2-3 will be described with reference to FIG. 24. In Example 2-3, the concealing layer 67 is omitted from Example 2-2. In Example 2-3, since the light transmissive decorative film 62 had no concealing layer 67, the image LIMG1 on the display 64 was not projected onto the concealing layer 67, and even when viewed obliquely, the image LIMG1b from the display 64 and the image projected onto the concealing layer 67 were not seen double and the image was not blurred. Other effects were the same as those of Example 2-2, but the image from the display 64 could be made brighter by eliminating the concealing layer 67.

The decorative panel, the display device, and the display method in the present disclosure are not limited to the above-described embodiments, and various other modifications are possible.

For example, when interference pigments are used as the material of the decorative ink used to print the pattern layer, the printed object according to each of the embodiments described in the first disclosure can be used, and as a modified pattern, the second color pattern layer may contain first interference pigments of a plurality of colors that generates beams of first interference light different from each other, and the first color pattern layer may contain second interference pigments that generate second interference light of a single color different from a color mixture exhibited by the plurality of first interference pigments. In addition, although the first color pigment chips are first interference pigments of two colors in each of the above embodiments, the first color pigment chips may be first interference pigments of three or more colors, instead.

As described above, the decorative panel 61 (printed object) may further include the smoke panel 63. In this case, it is possible to prevent the color tone of the light transmissive decorative film 62 from becoming lighter and the contrast of the image on the display on the back surface from deteriorating.

The total light transmittance of the smoke panel 63 may be 40% or less. In this case, the concealing property is improved, and it is possible to reduce a change in the color tone of the light transmissive decorative film 62 through the base.

The smoke panel 63 may be colored by a pigment or dye added to the resin. In this case, adjustment of the total light transmittance of the smoke panel 63 becomes easy.

The smoke panel may be brown smoke. When the light transmissive decorative film 62 has a woodgrain pattern, the brown color of the smoke panel 63 improves compatibility with the light transmissive decorative film 62.

The printed object and the display device according to any one of the first to sixth disclosures can be used for a device that displays an image through a part of a wall surface or a ceiling of a bedroom, a kitchen, a living room, or the like, incorporated into a top plate of a table, a kitchen door, an exterior of a system kitchen, a refrigerator door, or an entrance door in order to display information, used to conceal an intercom or an operation panel installed on a wall surface of a lavatory, a closet door, a wall surface of a bath interior, a toilet interior, a door, or a wall surface, incorporated into a headboard of a bed, incorporated into a table of a restaurant, a table of a cultural facility such as a school or a library, a learning desk, or a music stand of an electronic piano, installed on an elevator wall surface or a wall surface in an amusement facility, used to conceal an advertisement inside or outside a public transportation facility such as a bus or a train, an ATM display plate, a ticket vending machine, a landscape-friendly sign, a time table display panel, a vending machine display surface, an elevator display panel, a show window in a commercial facility, and a display panel of a home appliance (a vacuum cleaner, an electric fan, a microwave oven, a rice cooker, a pot, a coffee maker, etc.), used to conceal display of a tablet terminal, a smartphone, and a mobile terminal, and used for a surface of an interior (a meter panel, an information display unit, a door trim, or an interior of a vehicle) of a means of transportation and an exterior of a means of transportation.

### [Mode 1]

A printed object including:
a light transmissive base material; and
a pattern printed layer, in which
the pattern printed layer includes a plurality of interference pearl pigments.

### [Mode 2]

The printed object according to mode 1, in which
the pattern printed layer includes a first color pattern layer containing the interference pearl pigments and a second color pattern layer containing the interference pearl pigments.

### [Mode 3]

The printed object according to mode 2, in which
each of the first color pattern layer and the second color pattern layer includes the plurality of interference pearl pigments.

### [Mode 4]

The printed object according to any one of modes 1 to 3, in which
particle sizes of the plurality of interference pearl pigments are different from each other.

### [Mode 5]

The printed object according to any one of modes 1 to 4, in which
particle sizes of the plurality of interference pearl pigments include 25 µm or more and 60 µm or less.

### [Mode 6]

The printed object according to mode 1, in which
the interference pearl pigments include titanium dioxide-coated mica.

### [Mode 7]

The printed object according to any one of modes 1 to 6, further including a reflective layer.

### [Mode 8]

The printed object according to mode 7, in which
total light transmittance of the reflective layer is 30% or more and 70% or less.

### [Mode 9]

The printed object according to mode 7 or 8, in which
the reflective layer is a vapor deposited metal layer.

### [Mode 10]

The printed object according to any one of modes 1 to 9, further including a smoke panel.

### [Mode 11]

The printed object according to mode 10, in which
the smoke panel has a total light transmittance of 40% or less.

### [Mode 12]

The printed object according to mode 10 or 11, in which
the smoke panel is colored by a pigment or dye added to a resin.

### [Mode 13]

The printed object according to any one of modes 10 to 12, in which
the smoke panel is brown smoke.

### [Mode 14]

A display device including:
the printed object according to any one of modes 1 to 13; and
a light source.

### Reference Signs List

1, 101, 100, 300 Display device
2, 2A, 2B, 2C, 102 Printed object
3 Light source
4 Light transmissive base material
5, 105 Pattern printed layer
10 First color pattern layer
14, 14a, 14b, 24, 24a, 24b Interference pigment (interference pearl pigment)
20 Second color pattern layer
50 Reflective layer
61 Decorative panel (printed object)
63 Smoke panel
65 Printed substrate (light transmissive base material)
66 Pattern layer (pattern printed layer)

## Claims

1. A printed object comprising:
a light transmissive base material; and
a pattern printed layer,
wherein the pattern printed layer includes a plurality of interference pearl pigments.

2. The printed object according to claim 1,
wherein the pattern printed layer includes a first color pattern layer containing the interference pearl pigments and a second color pattern layer containing the interference pearl pigments.

3. The printed object according to claim 2,
wherein each of the first color pattern layer and the second color pattern layer includes the plurality of interference pearl pigments.

4. The printed object according to claim 1,
wherein particle sizes of the plurality of interference pearl pigments are different from each other.

5. The printed object according to claim 1,
wherein particle sizes of the plurality of interference pearl pigments include 25 µm or more and 60 µm or less.

6. The printed object according to claim 1,
wherein the interference pearl pigments include titanium dioxide-coated mica.

7. The printed object according to claim 1, further comprising a reflective layer.

8. The printed object according to claim 7,
wherein total light transmittance of the reflective layer is 30% or more and 70% or less.

9. The printed object according to claim 7,
wherein the reflective layer is a vapor deposited metal layer.

10. The printed object according to claim 1, further comprising a smoke panel.

11. The printed object according to claim 10,
wherein the smoke panel has a total light transmittance of 40% or less.

12. The printed object according to claim 10,
wherein the smoke panel is colored by a pigment or dye added to a resin.

13. The printed object according to claim 10,
wherein the smoke panel is brown smoke.

14. A display device comprising:
the printed object according to any one of claims 1 to 13; and
a light source.
